(19) **Europäisches Patentamt / European Patent Office / Office européen des brevets**

(11) **EP 3 898 146 B1**

(12) # EUROPEAN PATENT SPECIFICATION

(45) Date of publication and mention of the grant of the patent:
**06.09.2023 Bulletin 2023/36**

(21) Application number: **19836537.1**

(22) Date of filing: **16.12.2019**

(51) International Patent Classification (IPC):
**B28B 1/00** *(2006.01)*    **B29C 64/106** *(2017.01)*
**B33Y 10/00** *(2015.01)*    **B33Y 30/00** *(2015.01)*
**B33Y 70/00** *(2020.01)*    **C04B 28/02** *(2006.01)*

(52) Cooperative Patent Classification (CPC):
(C-Sets available)
**B28B 1/001; B28B 3/20; B33Y 10/00; B33Y 30/00; B33Y 70/00; B33Y 80/00; C04B 28/02;**
C04B 2111/00129; C04B 2111/00181; Y02W 30/91

*(Cont.)*

(86) International application number:
**PCT/IB2019/060857**

(87) International publication number:
**WO 2020/128791 (25.06.2020 Gazette 2020/26)**

(54) **CEMENTITIOUS MIXTURE FOR A 3D PRINTER, WITH IMPROVED PERFORMANCE, AND RELATIVE USE IN SAID PRINTER**

ZEMENTGEMISCH FÜR EINEN 3D-DRUCKER MIT VERBESSERTER LEISTUNG UND ZUGEHÖRIGE VERWENDUNG IN BESAGTEM DRUCKER

MÉLANGE CIMENTAIRE POUR IMPRIMANTE 3D À PERFORMANCE AMÉLIORÉE, ET UTILISATION DANS LADITE IMPRIMANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2018 IT 201800020080**

(43) Date of publication of application:
**27.10.2021 Bulletin 2021/43**

(73) Proprietor: **HeidelbergCement AG**
**69120 Heidelberg (DE)**

(72) Inventors:
- **ROSSINO, Chiara**
  **24068 Seriate (BG) (IT)**
- **RAMPINELLI, Flavio**
  **24059 Urgnano (BG) (IT)**
- **PALOMBA, Martina**
  **80013 Casalnuovo Di Napoli (NA) (IT)**
- **CIVIDINI, Giovanni**
  **24040 Bonate Sopra (BG) (IT)**

(74) Representative: **De Gregori, Antonella et al**
**BIRD & BIRD SOCIETA TRA AVVOCATI S.R.L.**
**Via Porlezza, 12**
**20123 Milano (IT)**

(56) References cited:
- LE T T ET AL: "Mix design and fresh properties for high-performance printing concrete", MATERIALS AND STRUCTURES, KLUWER ACADEMIC PUBLISHERS, DO, vol. 45, no. 8, 19 January 2012 (2012-01-19), pages 1221-1232, XP035082641, ISSN: 1871-6873, DOI: 10.1617/S11527-012-9828-Z
- GOSSELIN C ET AL: "Large-scale 3D printing of ultra-high performance concrete - a new processing route for architects and builders", MATERIALS AND DESIGN, ELSEVIER, AMSTERDAM, NL, vol. 100, 25 March 2016 (2016-03-25), pages 102-109, XP029513521, ISSN: 0264-1275, DOI: 10.1016/J.MATDES.2016.03.097

**(Cont. next page)**

- **DATABASE WPI Week 201858 Thomson Scientific, London, GB; AN 2018-66107X XP002798037, & CN 108 374 675 A (CHINA COAL ENERGY RES INST CO LTD) 7 August 2018 (2018-08-07)**

(52) Cooperative Patent Classification (CPC): (Cont.)

C-Sets
**C04B 28/02, C04B 14/06, C04B 14/28, C04B 18/141, C04B 20/0076, C04B 2103/0079, C04B 2103/32, C04B 2103/58; C04B 28/02, C04B 14/06, C04B 14/28, C04B 20/0076, C04B 24/2647, C04B 24/38, C04B 2103/0088, C04B 2103/58**

**Description**

The present invention relates to a cementitious mixture for a 3D printer, with improved performance, and its use, more specifically for the production of finished products having a complex geometry, by means of a 3D printing apparatus.

The present invention falls within the field of cementitious mixtures or compositions to be used, by means of 3D printing technologies, for the production of three-dimensional products, in particular by means of 3D extrusion printing.

Mechatronics has reached a high level of pervasion in various industrial sectors, where robotic production has now been a consolidated process for several years. Additive Manufacturing (AM) is becoming increasingly important in the field of rapid prototyping. There are examples of the use of this technology for the production of complex pieces, especially in the case of objects for which a production in a large number of copies is not necessary, not only for example for dental implants or jewellery, but also for the production of chromium-cobalt nozzles for fuel, printed by General Electric for the new LEAP jet engines of the Airbus group A320 [1].

This technology is particularly advantageous when the products can be obtained directly from the digital model, with an absolutely reduced use of additional supporting material that is inevitably wasted after finishing the object.

Various techniques in the field of additive manufacturing allow the use of different materials, such as thermoplastic resins that can melt/harden within a limited range of temperatures, photocrosslinkable resins that are hardened by means of a laser beam or metal powders that melt using a laser beam and harden immediately after the passage of the laser.

The International Technical Committee on Additive Manufacturing ASTM F42 defines additive manufacturing as the *"process of joining materials to create objects starting from 3D model data, usually layer by layer, as opposed to subtractive production methods"* (this definition is object of ISO harmonization according to ISO 17296 -1) [2].

Cement-based materials have also been introduced into the field of additive manufacturing. These are materials that behave completely differently with respect to the other materials mentioned above and normally used in this type of technology. The characteristics required for a cement mix or composition to be used as material for AM must clearly take into consideration the typicality of the printing process.

Additive manufacturing technologies in the cement sector can be used in various fields, including architecture, building, art and design. These technologies have recently attracted a growing interest in the building industry, which mainly derives from the possibility of offering more freedom in the design of complex shapes, with potential aesthetic and functional advantages, reducing production times and costs [3]. Before printing any object, however, a 3D model must be created using appropriate software. The 3D model is divided into a certain number of layers which then correspond to the different deposition layers provided by the AM process. These steps require specific skills, which are not common in industrial building and an error in the implementation phase of the 3D model inevitably leads to an error in production. Among the existing techniques that apply the additive manufacturing technology, extrusion 3D printing seems to be the one with the greatest potential for development in the building industry. This technique generally provides at least one print head to which a nozzle, generally pressurized, is mounted. The print head is fed with a cementitious mixture and driven by motors in precise points in space, following a 3D model of the object to be printed.

The speed with which the material is extruded through the nozzle and the speed with which the print head moves in space are some of the design parameters that determine the final print resolution. The nozzle is piloted to trace the paths in space that allow the object, represented digitally, to be reproduced. As the material exits from the nozzle, it is placed on the surface of the object under construction and the construction itself of the object then proceeds in the form of a succession of superimposed layers, in a vertical direction, until the entire object has been constructed.

Conceptually, the whole printing process can be divided into five steps:

- Creation of the model of the objects in CAD 3D;
- Sectioning of the model in layers;
- Conversion of the map of each layer into instructions for the machine;
- Formation of the object by depositing successive layers of cementitious material;
- Recovery of the object.

The object, designed as a CAD 3D model, is converted into an STL format file and cut into layers having the desired thickness. The printing path of each layer is then generated to create a G-Code printing file. The preparation of the cementitious material involves mixing and placing the material itself in a suitable container. Once the fresh material has been introduced into the container, it can be transported through a pump-tubing-nozzle system to print cementitious filaments, which can thus construct the desired object, layer by layer. This process has the advantage of allowing the deposition of material only in the spaces provided by the 3D model, unlike traditional building technologies, and the possibility of creating multi-material objects. The disadvantage of this method, on the other hand, could be the need for identifying a suitable supporting technique for creating complex objects.

3D printing of cementitious materials, using the extrusion technique, appeared for the first time in 2007, thanks to the research team of the University of Loughborough (United Kingdom) [4]. This research group presented for the first time the potential of using cementitious materials in AM, focusing on some critical aspects, such as the production of large objects, the complexity of the formulations, the need for identifying the correct rheological and mechanical properties of the same during printing and curing, the need for ensuring sufficient adhesion of the intermediate layers. The result of these studies led to the creation of a 3D printer for cementitious materials, which extrudes a mixture with high performance under the control of the computer. This 3D printer makes it possible to produce objects such as complex structural components, curved cladding panels and particular architectural elements.

The main characteristics for evaluating whether a cementitious material is suitable as a material for 3D extrusion printing, now widely identified and defined, are the following [5]:

- Extrudability: i.e. the characteristic that allows the material to flow easily through the nozzle. This characteristic is controlled by the correct balance between pumping power, extrusion flow-rate and geometry of the nozzle;
- Processability time of the material (open time): i.e. the time that passes from the preparation of the material to when it is too viscous to be correctly extruded in the 3D printing process;
- Buildability: i.e. the capacity of the material in the fresh state to support the weight of the upper layers, which is a property that depends on the rheology of the material, but also on the adhesion between the layers.

The right balance must be found for obtaining the right formulation as these characteristics are antithetical. For this reason, it is essential to identify suitable additives, as well as the correct dispersion of the aggregates in the cement matrix, in order to optimize the formulation.

Other significant examples in the field of AM extrusion applied to the cement sector are the following:

- University of South California: this developed a manufacturing technology called Contour Crafting (CC, which uses computer control for creating smooth and precise surfaces, both planar and of any form [6]. Even if the technique is based on the extrusion of AM materials, it is a hybrid method that combines an extrusion process for the formation of the surfaces of the object and a filling process (pouring or injection) to build the core of the object, also using standard industrial materials [7]. The extrusion process only constructs the outer edges (circles) of each level of the object. After the complete extrusion of each closed section of a given layer, if necessary, the filling material can be poured to fill the area defined by the extruded edges. The application of CC in the construction of buildings is effected by a trestle structure that carries the nozzle and moves it on two parallel lanes installed on the construction site. [8];
- WinSun: is a company that uses large 3D printers that extrude a mixture of fast-drying cement and recycled materials [9]. The technology is based on the AM extrusion technique and uses a CAD design as model. A computer controls a mechanical extruder arm to deposit the cementitious material, which is treated with hardeners so that each layer is solid enough to support the next one, producing one wall at a time. The pieces are then subsequently joined together, directly on the construction site;
- University of Technology of Eindhoven: this research group studied a new model of 3D concrete printing technology, which, like other machines (such as the Contour Grafting printer), resembles a crane. It is therefore a non-portable machine, with an adjustable printer head, with concrete mixing, a pump and a printing volume of $11 \times 5 \times 4$ m$^3$.

Over the years, specific cementitious formulations have been developed to be printed by suitable 3D printers and some of these have also been patented. In this respect, with regard to formulations based on cement, the documents CN104310918, CN201510838044A, WO2017/050421A1, US2014/0252672A1 can be mentioned. With respect to the extrusion technology applied to this sector, the most significant patents/patent applications are the result of the above-mentioned research centres, and US7641461B2, US7837378B2, US7878789B2 and US 7753642B2 and EP3421201A1, can be cited by way of example.

Other examples of cement compositions and its use in 3D printing are disclosed in the following documents: T.T. Le, S.A. et al. [05]: "Mix design and fresh properties for high-performance printing concrete", MATERIALS AND STRUCTURES, KLUWER ACADEMIC PUBLISHERS, DO, vol. 45, no. 8, 19 January 2012 (2012-01-19), pages 1221-1232,; Gosselin C. et al.: "Large-scale 3D printing of ultra-high performance concrete - a new processing route for architects and builders", MATERIALS AND DESIGN, ELSEVIER, AMSTERDAM, NL, vol. 100, 25 March 2016 (2016-03-25), pages 102-109, and CN 108374675 A (CHINA COAL ENERGY RES INST CO LTD).

Although specific cementitious formulations/mixtures have been developed to be printed by 3D printers, the need for identifying cement compositions that solve the problems relating to the following specificities is particularly felt:

- the cementitious mixture to be printed in 3D by extrusion must be extrudable and buildable in the fresh state;
- the cementitious mixtures of the state of the art have a poor mechanical strength at short deadlines, i.e. 24 hours;
- the cementitious mixture must be correctly prepared in the shortest possible time to be immediately pumped and printed;

- the 3D printer for cementitious mixtures must have specific characteristics that are not found in printers currently on the market.

In order to solve the technical problems considered above, the objectives of the present invention are:

- to identify specific cementitious mixtures, optimized in terms of simultaneous extrudability and buildability in the fresh state, in order to accurately reproduce a 3D model;
- to identify specific cementitious mixtures characterized by an improved mechanical strength at short deadlines, i.e. 24 hours;
- to identify specific cementitious mixtures characterized by being able to be mixed optimally without complex machinery, before the pumping phase, and by applying a reduced mixing stress, with a consequent reduction in the preparation times, proving however to be extrudable/printable;
- to re-design and print, with a plastic filament, some parts of a 3D printer to adapt it to processing/printing the desired cementitious mixtures.

The object of the present invention therefore relates to a cementitious mixture for a 3D printer which comprises a) cement or hydraulic binder, b) latent hydraulic addition, c) filler, d) aggregates, e) additives, f) water, said mixture being characterized in that

component c) i.e. the filler, in accordance with standard UNI EN 12620-1: 2008, selected from calcareous, silica or silico-calcareous fillers, preferably calcareous fillers, alone or in a mixture, has a particle size which is such that 90% by weight of the filler passes through an 0.063 mm sieve;

component d) is present in a quantity ranging from 10% to 80% by weight, preferably from 25% to 50% by weight, with respect to the total weight of the cementitious mixture, and is composed of calcareous, silica or silico-calcareous aggregates, in accordance with standard UNI EN 206: 2014, alone or mixed with each other, having a particle size with a maximum diameter less than or equal to 2 mm, said component d) being composed of one or more fractions having a particle size with a diameter greater than 0.2 mm, preferably with a diameter greater than 0.6 mm, and a fraction having a particle size with a diameter less than or equal to 0.2 mm and which is such that less than 2% by weight passes through an 0.063 mm sieve;

component e) comprises superplasticizers and at least two rheology modifiers, and possibly shrinkage reducing agents and hydrophobic agents, said cementitious mixture being characterized by a torque value ranging from 1,000 N.mm to 2,100 N.mm, measured by a rotational viscometer, model Schleibinger Viskomat XL, with a fixed blade at a rotation rate of 5 revolutions per minute (rpm) and at a temperature of 20°C.

The torque is measured by means of a rheological method, with a rotational viscometer, model Schleibinger Viskomat XL at a controlled rotation rate. The measurement system consists of a fixed blade, having a diameter of 145 mm, mounted concentrically in a cylindrical rotating container for samples, having a diameter of 168 mm. The cementitious mixtures according to the present invention were characterized using a step method, varying the rotation rate from a minimum value of 5 rpm to a maximum value of 60 rpm. The total duration of the test, carried out at a temperature of 20°C, is 15 minutes during which the punctual data are collected at the desired rates.

The above-mentioned technical problem of reducing the mixing stress and relative times is surprisingly solved by the specific additive system (component e) according to the present invention. The increase in the maximum particle size of the aggregates is also particularly relevant. The pair of rheology modifying agents present in component e) of the cementitious mixture according to the present invention allows the surface water bleeding and the presence of fine particles on the surface of the cementitious mixture to be reduced, in addition to increasing the viscosity and uniformity of the cementitious mixture itself.

The ratio between the superplasticizer and the two rheology modifiers, simultaneously present, ranges between 0.6 and 2.3, preferably between 0.7 and 1.2.

The cementitious mixture for a 3D printer according to the invention preferably comprises or is composed of

a) from 10% to 70% by weight of hydraulic binder or cement, preferably selected from Portland cement, sulfoaluminate cement and/or aluminous cement and/or quick-setting natural cement, alone or mixed with each other, even more preferably Portland cement alone or in a mixture with sulfoaluminate cement;

b) from 0.5% to 25% by weight, preferably from 0.5% to 20% by weight, of a natural or artificial hydraulic addition, preferably granulated blast-furnace slag, having a specific surface ranging from 3,500 $cm^2/g$ to 6,500 $cm^2/g$, determined according to the Blaine method according to EN 196-6:2010, preferably from 4,000 $cm^2/g$ to 5,000 $cm^2/g$;

c) from 10% to 50% by weight, preferably from 15% to 40% by weight, of a filler, selected from calcareous, silica or silico-calcareous fillers, preferably calcareous fillers, alone or mixed with each other, having a particles size which is such that 90% by weight of the filler passes through an 0.063 mm sieve;

d) from 10% to 80% by weight, preferably from 25% to 50% by weight, of calcareous, silica or silico-calcareous aggregates, alone or mixed with each other, having a particle size with a maximum diameter less than or equal to 2 mm, said component d) being composed of one or more fractions having a particle size greater than 0.2 mm, preferably with a diameter greater than 0.6 mm, and a fraction having a particle size with a diameter less than or equal to 0.2 mm and which is such that less than 2% by weight passes through an 0.063 mm sieve;

e) from 0.01% to 1.5% by weight, preferably from 0.05% to 0.8% by weight, of a superplasticizer selected from superplasticizers such as acrylic-based polycarboxylates, lignosulfonates, naphthalene sulfonates, melamine or vinyl compounds, more preferably polycarboxylic ethers; from 0.009% to 0.5% by weight, preferably from 0.01% to 0.3% by weight, of a rheology modifying agent which is a polyamide with a molecular weight ranging from $2\times10^6$ Da to $2\times10^7$ Da, preferably from $2\times10^6$ Da to $5\times10^6$ Da; from 0.005% to 1.0% by weight, preferably from 0.008% to 0.50% by weight, of a rheology modifying additive selected from cellulose or its derivatives, more preferably hydroxymethylethyl cellulose; from 0.0% to 1.0% by weight, preferably from 0.3% to 0.6% by weight of a shrinkage reducing agent; from 0.0% to 0.5%, preferably from 0.05% to 0.30% and more preferably from 0.10% to 0.30% of a hydrophobic additive selected from silicone, silane derivatives and/or mixtures thereof, preferably an alkyloxysilane,

wherein the binder/aggregate weight ratio ranges from 0.4 to 2.0, preferably from 0.55 to 1.4, the binder being composed of components a) and b) of the cementitious mixture,

wherein the ratio between the superplasticizer and the two rheology modifiers, simultaneously present, ranges between 0.6 and 2.3, preferably between 0.7 and 1.2;

and said mixture has a torque value ranging from 1,000 N.mm to 2,100 N.mm, measured at a rotation rate of 5 revolutions per minute (rpm) and at a temperature of 20°C.

The percentages indicated above are percentages by weight with respect to the total weight of the cementitious mixture in powder form, i.e. excluding water.

In the cementitious mixture according to the present invention the water/binder weight ratio is within the range of 0.25 to 0.8, preferably from 0.35 to 0.6, wherein the binder is composed of components a) and b) of the cementitious mixture according to the invention.

In the cementitious mixture according to the present invention the percentages referring to the total weight ratio water/cementitious mixture in powder form are within the range from 15% to 21%, preferably from 15.5% to 19.5%.

The cementitious mixture according to the present invention is surprisingly characterized by a reduced mixing stress, during the preparation phase, and an optimal balance of the properties of interest: it guarantees at the same time, in fact, a good buildability, extrudability and processability time, thus being particularly suitable for deposition by extrusion 3D printing. It is also characterized by an improved mechanical strength at short deadlines, i.e. 24 hours, having a mechanical resistance of interest, however, as early as a few hours after packaging, i.e. at 5-8 hours at 20°C.

This optimization has been surprisingly achieved thanks to the specific combination of suitable additives, a precise dispersion of the aggregates with specific dimensions in the binder matrix and a specific torque range.

It should be remembered, in fact, that from a rheological point of view the relevant parameters go in exactly opposite directions: the material in the fresh state must have a viscosity that guarantees that it be correctly extruded, but at the same time that allows it to be self-supporting during the printing process, so as to guarantee the creation of the 3D object designed. Consequently, in order to coexist, the extrudability and buildability require a correct compromise in terms of rheological properties, as they have an opposing influence on these two parameters.

The concept of buildability should not be confused with the green strength, defined as the strength of the unhardened cement material in order to maintain its original form until the material starts to set and the hydration products provide sufficient mechanical strength [10]. The cementitious mixture described must be capable of being self-supporting once it has been deposited (buildability concept) during the whole printing process layer by layer. This property, as already mentioned, depends mainly on the rheological behavior of the material and, at the same time, on the adhesion between the layers.

The cementitious mixture for 3D printing even more preferred according to the present invention comprises or is composed of:

a) from 10% to 70% by weight of hydraulic binder or cement, selected from CEM I 52.5 R or CEM I 52.5 N, or sulfoaluminate cement alone or in a mixture, preferably CEM I 52.5R or sulfoaluminate cement, more preferably CEM I 52.5R alone or in a mixture with sulfoaluminate cement;

b) from 0.5% to 20% by weight of granulated blast-furnace slag, having a specific surface ranging from 4,000 cm$^2$/g to 5,000 cm$^2$/g, determined according to the Blaine method according to EN 196-6:2010;

c) from 15% to 40% by weight of a calcareous filler having a particles size which is such that 90% by weight of the filler passes through an 0.063 mm sieve;

d) from 25% to 50% by weight of calcareous, silica or silico-calcareous aggregates, alone or in a mixture, having a particle size with a maximum diameter less than or equal to 2 mm, said component d) being composed of one or more fractions having a particle size greater than 0.2 mm, preferably with a diameter greater than 0.6 mm, and a fraction having a particle size with a diameter less than or equal to 0.2 mm and such that less than 2% by weight passes through an 0.063 mm sieve;

e) from 0.05% to 0.8% by weight of a superplasticizer based on polycarboxylic ether; from 0.01% to 0.03% by weight of a rheology modifying additive which is a polyamide with the amide nitrogen substituted and having a MW ranging from $2\times10^6$ Da to $5\times10^6$ Da; from 0.008% to 0.50% by weight, of a rheology modifying additive which is hydroxymethylethyl cellulose; from 0.3% to 0.6% by weight, of a shrinkage reducing agent; from 0.1% to 0.30% of a hydrophobic additive selected from silicone or silane derivatives and/or mixtures thereof, preferably an alkyloxysilane, more preferably, triethoxyoctyl-silane;

wherein the binder/aggregate weight ratio ranges from 0.55 to 1.4, the binder being composed of components a) and b), wherein the ratio between the superplasticizer and the two rheology modifiers, simultaneously present, ranges between 0.7 and 1.2;

and said cementitious mixture has a torque value ranging from 1,000 N.mm to 2,100 N·mm, measured at a rotation rate of 5 revolutions per minute (rpm) and at a temperature of 20°C.

In the present description, the term *"cement or hydraulic binder"* refers to a material in powder form which, in the case of mixing with water, forms a paste which hardens by hydration and which, after hardening, maintains its strength and stability even under water. The hydraulic binder or cement of the cementitious mixture according to the present invention is preferably selected from Portland cement, sulfoaluminate cement and/or aluminous cement and/or natural quick-setting natural cement. These cements can also be used in a mixture with each other. The Portland cement according to the present invention is I 42.5 or 52.5 strength Portland cement, with an ordinary (N) or high (R) initial resistance class, according to the standard EN 197-1: 2011. The preferred cement it is CEM I 52.5 R or CEM I 52.5 N, or sulfoaluminate cement, more preferably CEM I 52.5R or sulfoaluminate cement or mixtures thereof, even more preferred CEM I 52.5R alone or mixed with sulfoaluminate cement.

In the present description, the term *"latent hydraulic addition"* refers to a natural or artificial hydraulic addition, preferably with pozzolanic or latent hydration properties (Type II additions according to EN 206:2013), more preferably granular blast furnace slag (GGBS: "ground grain ground slag") compliant with EN 15167-1:2006, having a specific surface ranging from 3,500 cm$^2$/g to 6,500 cm$^2$/g, preferably from 4,000 cm$^2$/g to 5,000 cm$^2$/g, determined according to the Blaine method according to EN 196-6: 2010. The latent hydraulic addition is added to the formulation to improve the processability of the material. When present, this type of addition forms part of the binder, consequently the binder in the binder/aggregate and water/binder ratio is given by the sum of the cement or hydraulic binder and the latent hydraulic addition (or GGBS).

In the present description, the term *"filler"* is defined in accordance with the standard UNI EN 12620-1: 2008 as an aggregate, characterized by having a particle size which is such that approximately 90% of the filler passes through an 0.063 mm sieve. It can be added to building materials to give various properties. The filler according to the present invention is selected from calcareous, siliceous or silico-calcareous fillers, preferably calcareous, alone or in a mixture.

In the present description, the term "aggregate" refers to calcareous, siliceous or silico-calcareous aggregates which are known and commonly available products. Aggregates for use in cementitious compositions are defined in the standard UNI EN 206: 2014 as a natural, artificial, reclaimed or recycled granular mineral constituent suitable for use in concrete. Aggregates are normally used for obtaining greater strength, a lower porosity and a decrease in efflorescence. In the present invention, the aggregates have a particle size with a maximum diameter less than or equal to 2 mm.

The aggregates in the cementitious mixture according to the present invention also comprise a fraction having a particle size with a diameter ranging from 0.00 mm to 0.20 mm. This fraction therefore has a particle size with a diameter less than or equal to 0.2 mm and such that less than 2% by weight passes through an 0.063 mm sieve. The aggregates in the cementitious mixture according to the present invention are therefore composed of one or more fractions having a particle size with a diameter greater than 0.2 mm, preferably with a diameter greater than 0.6 mm, and a fraction having a particle size with a diameter less than or equal to 0.2 mm and such that less than 2% by weight passes through an 0.063 mm sieve.

In the present description, the term *"additives"* refers to different types of additives which, in the cementitious mixture according to the present invention, allow an optimized cementitious mixture for 3D printing to be obtained. Combined with the specific dispersion and size of the aggregates, they guarantee, in fact, a synergistic effect with a good construction rate, extrudability, processability time, processability and development of mechanical properties. The superplasticizer is an additive that is added to improve the processability of the product without increasing the water content. Among these, an acrylic-based polycarboxylated superplasticizer is preferred, dosed according to the temperature of the mixture, the ambient temperature and degree of fluidity required in the formulation. Other possible superplasticizers are lignin sulfonates, naphthalene sulfonates, melamine or vinyl compounds, the most preferred are polycarboxylic ethers.

A further additive in the cementitious mixture according to the present invention is the "rheology modifying agent", i.e. a substance which, if present in a cementitious composition, is able to modify the rheological properties in the fresh state and the adhesion to the substrate. This additive is added to this type of formulation to increase the viscosity of the product in order to avoid segregation. The rheology modifying agent according to the present invention is composed of "a rheology modifying system", i.e. at least two rheology modifying agents, said system comprising 1) rheology modifying agents having a pseudoplastic behaviour, such as long-chain polysaccharides or high-molecular-weight hetero-polysaccharides with or without substituent groups bound to the hydroxyl groups of the pyranose rings and 2) high-molecular-weight polymers.

Said rheology modifying agents 1) are preferably cellulose derivatives such as cellulose, even more preferably hydroxymethylcellulose, hydroxyethylcellulose, hydroxymethyl-propylcellulose, carboxymethylcellulose.

The high-molecular-weight polymers 2), also called high-molecular-weight polymeric stabilizers, are polyamides, preferably polyamides with the amide nitrogen substituted, having a molecular weight ranging from $2\times10^6$Da to $2\times10^7$Da, preferably from $2\times10^6$Da to $5\times10^6$Da. The rheology modifying system is capable of improving the mixing, reducing the mixing time itself. This behaviour facilitates pumping, ensuring an easy sliding and levelling during the feeding step to the pump of the mixture object of the present invention. In particular, the pair of rheology modifying agents can be included in the present formulation to reduce surface water bleeding and the presence of fine particles on the surface of the material prepared, and also to increase the viscosity and uniformity of the cementitious formulation.

The system is also able to confer a thixotropic behaviour to the homogenized material as its consistency changes from liquid to solid in a short time, and vice versa, with a variation in the shear stress. This behaviour is also reflected in the fact that the material is extrudable when moved, whereas, once deposited, it retains its shape at the exit of the nozzle.

Within the scope of the present invention, the molecular weight of the polyamide refers to the weight average MW calculated with the intrinsic viscosity method (A.Büyükyagc et al. *"Synthesis of copolymers of methoxy polyethylene glycol acrylate and 2-acrylamido-2-methyl-1-propanesulfonic acid: Its characterization and application as superplasticizer in concrete";* Cement and Concrete Research 39 (2009) 629-635).

The determination of the molecular weight of the high-molecular-weight polyamide was carried out through measurements of the so-called intrinsic viscosity:

$$[\eta] = \lim_{c\to 0}\frac{1}{c}\frac{\eta - \eta_s}{\eta_s} \qquad (1.1)$$

wherein $\eta$ is the viscosity of the (diluted) polymer solution, $\eta_s$ that of the pure solvent and c is the concentration by weight of polymer in solution.

The intrinsic viscosity is obtained with an experimental procedure that provides for the measurement of the viscosity at different concentrations. The function data are indicated on a linear scale in relation to the concentration, the linear regression line is subsequently extrapolated to the value c=0, thus obtaining what is expressed by (1.1).

As already specified, if the intrinsic viscosity is known, the molecular weight of the polymer can be estimated. According to the theories on diluted polymer solutions, in fact, the following can be written:

$$[\eta] = KM_v^\alpha \cong KM_w^\alpha \qquad (1.2)$$

wherein $M_v$ is the viscometric molecular weight and is approximately equal to the weight average molecular weight Mw. K and a are the Mark-Houwink coefficients. They depend on the polymer-solvent pair and are tabulated for many polymers.

If the Mark-Houwink coefficient values are known for the polymer of interest, (1.2) is inverted to provide the molecular weight:

$$M = \left(\frac{[\eta]}{K}\right)^{\frac{1}{\alpha}} = KM_v^\alpha \cong KM_w^\alpha \qquad (1.3).$$

Another preferred additive to be added is the shrinkage reducing agent, also known as SRA, which includes a wide variety of glycols and polyols and is responsible for reducing shrinkage deformation throughout the whole operating life of the hardened product.

A further additive to be added to the mixture is the hydrophobic agent which reduces the water absorption of the finished product, improving its durability. This greater durability of the finished product is therefore due to the presence of the hydrophobic agent which limits the action of water and any atmospheric agents. In order to obtain this effect, the molecules at the base of this additive are mainly based on silicone, silane, and/or mixtures thereof, preferably alkyloxysilane-based, even more preferably triethoxyoctyl-silane.

The present invention also relates to the use of the cementitious mixtures according to the present invention as extrusion material in a 3D printer.

The present invention further relates to a 3D printing process comprising the following steps:

- preparation of the cementitious mixture according to the present invention;
- feeding the cementitious mixture to a 3D printing apparatus;
- extrusion of the cementitious mixture from the 3D apparatus by means of an extruder suitable for extruding the mixture;
- printing the 3D model by the deposition of consecutive layers of cementitious mixture;

It is disclosed also an apparatus suitable for implementing the printing process of a 3D object fed with a cementitious mixture according to the present invention, said apparatus comprising a feeding system, an extruder, a flexible pipe which connects the feeding system to the extruder equipped with a nozzle.

More specifically, the above-mentioned apparatus is part of a 3D printer, with which an object, previously designed by specific software, is produced using the cementitious mixture according to the present invention. Said apparatus comprises a feeding system comprising a pumping system, an extruder and a flexible pipe which connects the feeding system to the nozzle of the extruder. The pumping system can be any pumping system known in the art (peristaltic pump, progressive cavity pump, etc.). Alternatively, a continuous mixing and pumping system can be used, wherein the cementitious mixture is sent in continuous directly from the mixing device, in which the various components are mixed to form the cementitious mixture, to the extruder. The cementitious mixture is fed through a flexible pipe to the single-screw extruder mounted on the print head. The extruder is provided with a circular or rectangular nozzle.

More specifically, in the 3D printing process according to the present invention, the cementitious mixture is fed by means of a flexible pipe to an extruder of a 3D printer which allows an extruded item to be produced positioned in the printing area of the same.

This extruder is composed of two parts, i.e. a body and a nozzle, and becomes interfaced with the 3D printer; in particular the nozzle can be interchangeable in terms of dimensions and geometries, depending on the formulation to be processed.

The above-mentioned extruder allows cementitious mixtures according to the present invention to be deposited, and specifically mixtures which comprise aggregates having a particle size with a maximum diameter less than or equal to 2 mm and a torque value ranging from 1,000 N.mm to 2,100 N.mm, measured at a rotation rate of 5 rpm and at a temperature of 20°C.

The present invention also relates to a finished product with a complex geometry obtained by 3D printing with an apparatus fed with the cementitious mixture according to the present invention.

In the attached figures

- figure 1 is a schematic representation of an extruder for extruding the cementitious mixture according to the present invention;
- figure 2 is a photographic reproduction of the finished product with a complex geometry obtained according to example 1;
- figure 3 is a photographic reproduction of the finished product with a complex geometry obtained according to example 2;
- figure 4 is a photographic reproduction of the finished product with a complex geometry obtained according to example 3;
- figure 5 is a photographic reproduction of the finished product with a complex geometry obtained according to example 4;
- figure 6 is a photographic reproduction of the main components that form the apparatus for implementing the 3D printing process.

As previously indicated, the main components of the apparatus for implementing the 3D printing process, to which the cementitious mixture according to the present invention is fed, to be subsequently extruded and deposited, are the following:

1) Pumping system;

2) Flexible pipe connecting the pump to the extruder;

3) Extruder;

4) Circular or rectangular outlet nozzle.

The extrusion device can be mounted on any type of machine or robot that can receive it, so as to combine the extrusion process with the specific advantages relating to the kinematics of the machine/robot.

More specifically:

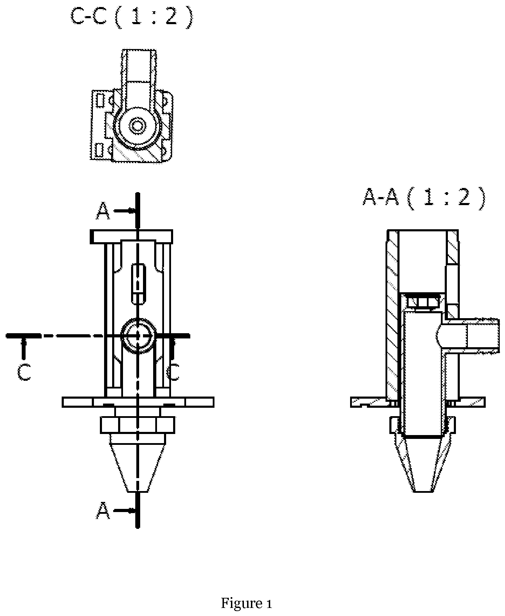

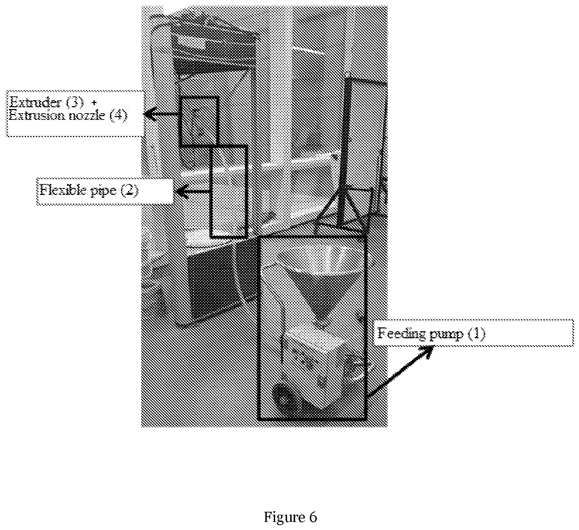

Figure 6 shows the feeding pump (1) which, in this case is a peristaltic pump. The flexible plastic pipe (2) that connects the feeding pump (1) to the extruder (3) is characterized by a circular section, with an internal diameter of 20 mm and a length ranging from 1.5 to 3 cm. The extruder (3) has been optimized for application with the cementitious mixture according to the present invention and is schematically shown in Figure 1.

This extruder is provided with an interchangeable outlet nozzle (4) having a circular or rectangular geometry. With respect to the first geometry, the diameter of the nozzle ranges from 4 mm to 20 mm, whereas in the case of a rectangular geometry, the short side measures from 2 to 8 mm and the long side from 6 to 24 mm.

All the parts of the extruder are made of ABS (acrylonitrile-butadiene-styrene) and are in turn printed using a 3D printer capable of processing polymeric materials.

The printing parameters can be controlled with various types of software. This software allows the object designed to be divided into sections governed by the printing resolution to be obtained. In particular, the object to be printed is designed by creating a 3D digital model using a CAD application, and is then divided into layers using the above-mentioned software, subsequently providing the machine with instructions and establishing the path (layer by layer) that the nozzle must follow in order to build the object. The software for dividing the object into layers has generally been created to manage materials such as plastic or metal and therefore it does not allow some important parameters, such as for example the flow-rate of the outgoing material, to be controlled directly.

In order to control the flow-rate of the extruded material, an approach has been followed similar to the control model of the extrusion of plastic material. The first step is to calculate the flow-rate required for printing the object. This is given by the diameter of the nozzle, the height of the layer, and the speed of the print head. Therefore, once the flow-rate value is known, the pump settings can be established, so that it can correctly supply the extruder:

The examples provided hereunder aim at demonstrating the efficiency of cementitious compositions according to the present invention, when processed by means of a 3D printing apparatus.

Example 1

A formulation of a cementitious mixture having the composition shown in the following Table 1 was prepared using a Hobart mixer, according to the following procedure:

- the solid components were mixed for 10 seconds at a rate of 140 rpm;
- water was then added and all the components were mixed for 2 minutes and 30 seconds at a rate of 140 rpm;
- the mixing was interrupted for 45 seconds to collect any material possibly remaining on the walls of the container;
- all the components were then mixed for 2 minutes at a rate of 140 rpm.

Table 1: Formulation extruded according to Example 1.

| Component | Composition (weight %) |
|---|---|
| Cement I 52.5 R | 18.13% |
| GGBS | 17.50% |
| Calcareous Filler | 20.54% |
| Silico-calcareous sand (0.00-0.200 mm) | 9.40% |
| Silico-calcareous sand (0.600-1.000 mm) | 23.00% |
| Silico-calcareous sand (1.000-1.500 mm) | 10.64% |
| Superplasticizer | 0.13% |
| Rheology modifier 1 | 0.01% |
| Rheology modifier 2 | 0.06% |

(continued)

| Component | Composition (weight %) |
|---|---|
| Superplasticizer/(Rheology modifier 1 + Rheology modifier 2) | 1.86 |
| Shrinkage reducing agent | 0.44% |
| Hydrophobic agent | 0.15% |
| Water/binder | 0.47 |
| Water/Total powder cementitious mixture | 16.50% |
| Binder/aggregate | 0.83 |

The cement is a cement of the type I 52.5 R coming from the Rezzato plant. The GGBS included in the formulation constitutes the latent hydraulic addition and is a granular blast furnace slag (GGBS: "ground grain ground slag") compliant with EN 15167-1:2006, having a specific surface equal to 4,450 $cm^2$/g (determined according to the Blaine method according to the standard EN 196-6: 2010), supplied by the company Ecocem with the trade-name of "Loppa di altoforno granulata macinata" (Ground granular blast furnace slag).

The calcareous filler is a high-purity filler, marketed by Omya Spa with the trade-name of Omyacarb 2-AV. The silico-calcareous aggregates were added in three fractions, a first fraction with a particle-size distribution ranging from 0.00 to 0.200 mm, a second fraction with a particle-size distribution ranging from 0.600 to 1.000 mm and a third fraction with a particle-size distribution ranging from 1.000 to 1.500 mm.

The superplasticizer is based on polycarboxylic ether, called Melflux 2641 F, and marketed by BASF. The rheology modifier 1 is a hydroxymethylethylcellulose called *"Tylose MH 60004* P6" marketed by ShinEtsu. The rheology modifier 2 is a high-molecular-weight synthetic polymer, more specifically a polyamide with the amide nitrogen substituted with a molecular weight approximately equal to $2 \times 10^6$Da, called Starvis 3040F marketed by BASF.

The shrinkage reducing agent (SRA), called SRA04, is marketed by Neuvendis; this is a mixture of glycols and special surfactants. The hydrophobic agent is a silane-based additive, more specifically an alkyl-oxysilane, called SEAL 200, marketed by Elotex.

These five additives are in solid form.

The ratio between the superplasticizer and the sum of the two rheology modifiers is equal to 1.86.

The water/binder ratio is equal to 0.47, the percentage referring to the weight ratio water/total cementitious mixture in powder form is 16.50%, whereas the binder/aggregate ratio is equal to 0.83 (wherein the binder is composed of cement and the latent hydraulic addition GGBS).

At the end of the mixing, the cementitious mixture having the composition indicated in Table 1, was characterized by means of a rotational viscometer with a controlled rotation rate, model Schleibinger Viskomat XL, at a temperature of 20°C. The test allowed the torque of the material to be characterized within a rotation-rate range varying from a minimum value of 5 rpm to a maximum value of 60 rpm, by means of a step method. Each velocity value was maintained for 1 minute and the total duration of the test was 15 minutes. The torque value, obtained at a rotation rate of 5 rpm, proved to be equal to 1342 N.mm.

At the end of the mixing, the cementitious mixture was inserted into the hopper of the peristaltic pump model Umiblok Magic Plus P100 (as shown in Figure 6), with the help of a steel pestle to facilitate the flow of the cementitious mixture towards the feeding hole, then proceeding for pumping. This latter operation was carried out by setting the speed regulator of the pump at the minimum scale value.

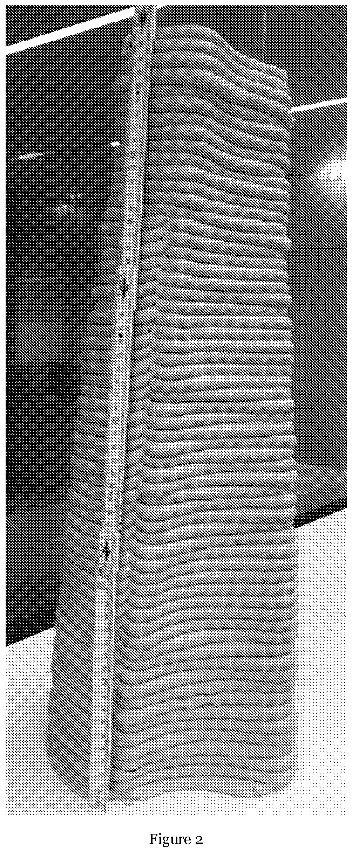

The mixture prepared as previously indicated was extruded using a triple-layered tapered-spiral printing path. The geometry of the 3D model in question derives from a triangle with rounded corners. The model was successfully printed (as shown in Figure 2) in a single printing session, applying the following printing parameters:

Height of layer: 12.0 mm;
Printing speed: 36 mm/s;
Extrusion flow-rate: 51 Kg/h;
Nozzle geometry: 15 mm diameter.

The mechanical resistance to compression value at 24 hours was equal to 12.9 MPa, according to the loading ramp as described in EN 196-1:2016.

Example 2

A formulation of a cementitious mixture having the composition shown in the following Table 2 was prepared using a Hobart mixer, according to the following procedure:

- the solid components were mixed for 10 seconds at a rate of 140 rpm;
- water was then added and all the components were mixed for 2 minutes and 30 seconds at a rate of 140 rpm;
- the mixing was interrupted for 45 seconds to collect any material possibly remaining on the walls of the container;
- all the components were then mixed for 2 minutes at a rate of 140 rpm.

Table 2: Formulation extruded according to Example 2.

| Component | Composition (weight %) |
|---|---|
| Cement I 52.5 R | 17.22% |
| Sulfoaluminate cement | 4.99% |
| GGBS | 16.63% |
| Calcareous Filler | 19.50% |
| Silico-calcareous sand (0.00-0.200 mm) | 9.83% |
| Silico-calcareous sand (0.600-1.000 mm) | 21.85% |
| Silico-calcareous sand (1.000-1.500 mm) | 9.22% |
| Superplasticizer | 0.13% |
| Rheology modifier 1 | 0.01% |
| Rheology modifier 2 | 0.06% |
| Superplasticizer/(Rheology modifier 1+ Rheology modifier 2) | 1.86 |
| Shrinkage reducing agent | 0.42% |
| Hydrophobic agent | 0.14% |
| Water/binder | 0.44 |
| Water/Total powder cementitious mixture | 16.8% |
| Binder/aggregate | 0.94 |

The cement is a cement of the type I 52.5 R coming from the Rezzato plant. The sulfoaluminate cement comes from the Guardiaregia plant. The GGBS included in the formulation constitutes the latent hydraulic addition and is a granular blast furnace slag (GGBS: "ground grain ground slag") compliant with EN 15167-1:2006, having a specific surface equal to 4,450 cm$^2$/g (determined according to the Blaine method according to the standard EN 196-6: 2010), supplied by the company Ecocem with the trade-name of "Loppa di altoforno granulata macinata" (Ground granular blast furnace slag).

The calcareous filler is a high-purity filler, marketed by Omya Spa under the trade-name of Omyacarb 2-AV. The silico-calcareous aggregates were added in three fractions, a first fraction with a particle-size distribution ranging from 0.00 to 0.200 mm, a second fraction with a particle-size distribution ranging from 0.600 to 1.000 mm and a third fraction with a particle-size distribution ranging from 1.000 to 1.500 mm.

The superplasticizer is based on polycarboxylic ether, called Melflux 2641 F, and marketed by BASF.

The rheology modifier 1 is a hydroxymethylethylcellulose called *"Tylose MH 60004 P6"* marketed by ShinEtsu. The rheology modifier 2 is a high-molecular-weight synthetic polymer, more specifically a polyamide with the amide nitrogen substituted with a molecular weight approximately equal to $2 \times 10^6$ Da, called Starvis 3040F marketed by BASF.

The shrinkage reducing agent (SRA), called SRA04, is marketed by Neuvendis; this is a mixture of glycols and special surfactants. The hydrophobic agent is a silane-based additive, more specifically an alkyl-oxysilane, called SEAL 200, marketed by Elotex.

These five additives are in solid form.

The ratio between the superplasticizer and the sum of the two rheology modifiers is equal to 1.86.

The water/binder ratio is equal to 0.44, the percentage referring to the weight ratio water/total cementitious mixture in powder form is 16.80%, whereas the binder/aggregate ratio is equal to 0.94 (wherein the binder is composed of cement type I 52.5 R, sulfoaluminate cement and the latent hydraulic addition GGBS).

At the end of the mixing, the cementitious mixture having the composition indicated in Table 2, was characterized by means of a rotational viscometer with a controlled rotation rate, model Schleibinger Viskomat XL, at a temperature of 20°C. The test allowed the torque of the material to be characterized within a rotation-rate range varying from a minimum value of 5 rpm to a maximum value of 60 rpm, by means of a step method. Each velocity value was maintained for 1 minute and the total duration of the test was 15 minutes. The torque value, obtained at a rotation rate of 5 rpm, proved to be equal to 1191 N.mm.

At the end of the mixing, the cementitious mixture was inserted into the hopper of the peristaltic pump model Umiblok Magic Plus P100 (as shown in Figure 6), with the help of a steel pestle to facilitate the flow of the cementitious mixture towards the feeding hole, then proceeding for pumping. This latter operation was carried out by setting the speed regulator of the pump at the minimum scale value.

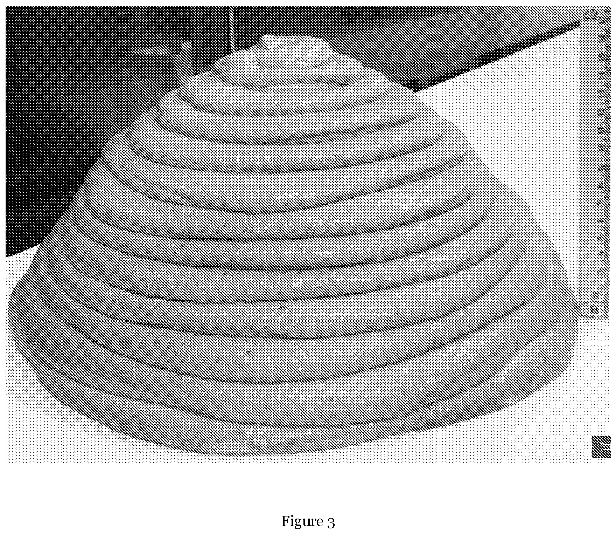

The mixture prepared as previously indicated was extruded using a conical triple-layered printing path. The model was successfully printed (as shown in Figure 3) in a single printing session, applying the following printing parameters:

Height of layer: 12.0 mm;
Printing speed: 36 mm/s;
Extrusion flow-rate: 51 Kg/h;
Nozzle geometry: 15 mm diameter.

The mechanical resistance to compression value at 7 hours proved to be equal to 7.8 MPa, whereas that at 24 hours was equal to 17.5 MPa, according to the loading ramp as described in EN 196-1:2016.

Example 3

A formulation of a cementitious mixture having the composition shown in the following Table 3 was prepared using a Hobart mixer, according to the procedure:

- the solid components were mixed for 10 seconds at a rate of 140 rpm;
- water was then added and all the components were mixed for 2 minutes and 30 seconds at a rate of 140 rpm;
- all the components were then further mixed for 2 minutes and 30 seconds at a rate of 240 rpm;
- the mixing was interrupted for 45 seconds to collect any material possibly remaining on the walls of the container;
- all the components were then mixed for 2 minutes at a rate of 140 rpm.

Table 3: Formulation extruded according to Example 3.

| Component | Composition (weight %) |
| --- | --- |
| Cement I 52.5 R | 18.13% |
| GGBS | 17.50% |
| Calcareous Filler | 33.56% |
| Silico-calcareous sand (0.00-0.200 mm) | 20.00% |
| Silico-calcareous sand (0.600-1.000 mm) | 10.00% |
| Superplasticizer | 0.15% |
| Rheology modifier 1 | 0.01% |
| Rheology modifier 2 | 0.06% |
| Superplasticizer/(Rheology modifier 1+ Rheology modifier 2) | 2.14 |
| Shrinkage reducing agent | 0.44% |
| Hydrophobic agent | 0.15% |
| Water/binder | 0.51 |
| Water/Total powder cementitious mixture | 17.85% |

(continued)

| Component | Composition (weight %) |
|---|---|
| Binder/aggregate | 1.19 |

The cement is a cement of the type I 52.5 R coming from the Rezzato plant. The GGBS included in the formulation constitutes the latent hydraulic addition and is a granular blast furnace slag (GGBS: "ground grain ground slag") compliant with EN 15167-1:2006, having a specific surface equal to 4,450 cm$^2$/g (determined according to the Blaine method according to the standard EN 196-6: 2010), supplied by the company Ecocem with the trade-name of "Loppa di altoforno granulata macinata" (Ground granular blast furnace slag).

The calcareous filler is a high-purity filler, marketed by Omya Spa under the trade-name of Omyacarb 2-AV. The silico-calcareous aggregates were added in two fractions, a first fraction with a particle-size distribution ranging from 0.00 to 0.200 mm and a second fraction with a particle-size distribution ranging from 0.600 to 1.000 mm.

The superplasticizer is based on polycarboxylic ether, called Melflux 2641 F, and marketed by BASF. The rheology modifier 1 is a hydroxymethylethylcellulose called *"Tylose MH 60004 P6"* marketed by ShinEtsu. The rheology modifier 2 is a high-molecular-weight synthetic polymer, more specifically a polyamide with the amide nitrogen substituted with a molecular weight approximately equal to $2\times10^6$Da, called Starvis 3040F marketed by BASF.

The shrinkage reducing agent (SRA), called SRA04, is marketed by Neuvendis: it is a mixture of glycols and special surfactants. The hydrophobic agent is a silane-based additive, more specifically an alkyl-oxysilane, called SEAL 200, marketed by Elotex.

These five additives are in solid form.

The ratio between the superplasticizer and the sum of the two rheology modifiers is equal to 2.14.

The water/binder ratio is equal to 0.51, the percentage referring to the weight ratio water/total cementitious mixture ratio in powder form is 17.85%, whereas the binder/aggregate ratio is equal to 1.19 (wherein the binder is composed of cement and the latent hydraulic addition GGBS).

At the end of the mixing, the cementitious mixture having the composition indicated in Table 3, was characterized by means of a rotational viscometer with a controlled rotation rate, model Schleibinger Viskomat XL, at a temperature of 20°C. The test allowed the torque of the material to be characterized within a rotation-rate range varying from a minimum value of 5 rpm to a maximum value of 60 rpm, by means of a step method. Each velocity value was maintained for 1 minute and the total duration of the test was 15 minutes. The torque value, obtained at a rotation rate of 5 rpm, proved to be equal to 1410 N.mm.

At the end of the mixing, the cementitious mixture was inserted into the hopper of the peristaltic pump model Umiblok Magic Plus P100 (as shown in Figure 6), with the help of a steel pestle to facilitate the flow of the cementitious mixture towards the feeding hole, then proceeding for pumping. This latter operation was carried out by setting the speed regulator of the pump at the minimum scale value.

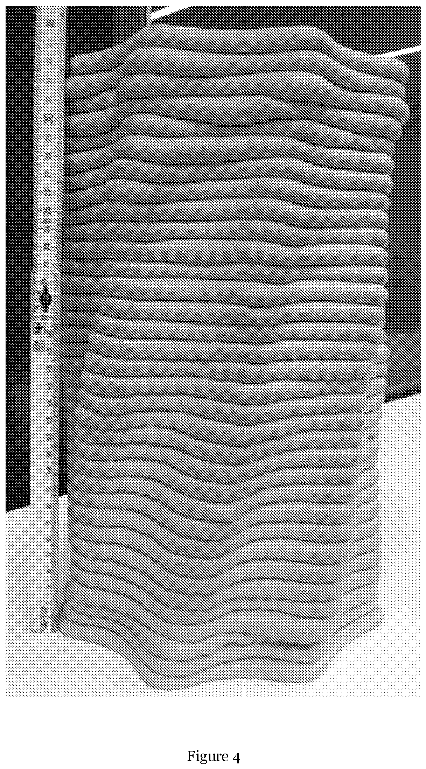

The mixture prepared as previously indicated was extruded using a triple-layered spiral printing path, having a geometry deriving from an octagon. The geometry of the 3D model in question derives from a triangle with rounded corners. The model was successfully printed (as shown in Figure 4) in a single printing session, applying the following printing parameters:

Height of layer: 12.0 mm;
Printing speed: 36 mm/s;
Extrusion flow-rate: 51 Kg/h;
Nozzle geometry: 15 mm diameter.

The mechanical resistance to compression value at 24 hours proved to be equal to 17.5 MPa, according to the loading ramp as described in EN 196-1:2016.

Example 4

A formulation of a cementitious mixture having the composition shown in the following Table 4 was prepared using a Hobart mixer, according to the procedure:

- the solid components were mixed for 10 seconds at a rate of 140 rpm;
- water was then added and all the components were mixed for 2 minutes and 30 seconds at a rate of 140 rpm;
- all the components were then further mixed for 2 minutes and 30 seconds at a rate of 240 rpm;
- the mixing was interrupted for 45 seconds to collect any material possibly remaining on the walls of the container;

- all the components were then mixed for 2 minutes at a rate of 140 rpm.

Table 4: Formulation extruded according to Example 4.

| Component | Composition (weight %) |
|---|---|
| Cement I 52.5 R | 17.22% |
| Sulfoaluminate cement | 5.00% |
| GGBS | 16.60% |
| Calcareous Filler | 31.90% |
| Silico-calcareous sand (0.00-0.200 mm) | 19.00% |
| Silico-calcareous sand (0.600-1.000 mm) | 9.50% |
| Superplasticizer | 0.15% |
| Rheology modifier 1 | 0.01% |
| Rheology modifier 2 | 0.06% |
| Superplasticizer/(Rheology modifier 1+ Rheology modifier 2) | 2.14 |
| Shrinkage reducing agent | 0.42% |
| Hydrophobic agent | 0.14% |
| Water/binder | 0.50 |
| Water/Total powder cementitious mixture | 19.00% |
| Binder/aggregate | 1.36 |

The cement is a cement of the type I 52.5 R coming from the Rezzato plant. The sulfoaluminate cement comes from the Guardiaregia plant. The GGBS included in the formulation constitutes the latent hydraulic addition and is a granular blast furnace slag (GGBS: "ground grain ground slag") compliant with EN 15167-1:2006, having a specific surface equal to 4,450 $cm^2$/g (determined according to the Blaine method according to the standard EN 196-6: 2010), supplied by the company Ecocem with the trade-name of "Loppa di altoforno granulata macinata" (Ground granular blast furnace slag).

The calcareous filler is a high-purity filler, marketed by Omya Spa under the trade-name of Omyacarb 2-AV. The silico-calcareous aggregates were added in two fractions, a first fraction with a particle-size distribution ranging from 0.00 to 0.200 mm and a second fraction with a particle-size distribution ranging from 0.600 to 1,000 mm.

The superplasticizer is based on polycarboxylic ether, called Melflux 2641 F, and marketed by BASF. The rheology modifier 1 is a hydroxymethylethylcellulose called *"Tylose MH 60004* P6" marketed by ShinEtsu. The rheology modifier 2 is a high-molecular-weight synthetic polymer, more specifically a polyamide with the amide nitrogen substituted with a molecular weight approximately equal to $2 \times 10^6$ Da, called Starvis 3040F marketed by BASF.

The shrinkage reducing agent (SRA), called SRA04, is marketed by Neuvendis: it is a mixture of glycols and special surfactants. The hydrophobic agent is a silane-based additive, more specifically an alkyl-oxysilane, called SEAL 200, marketed by Elotex.

These five additives are in solid form.

The ratio between the superplasticizer and the sum of the two rheology modifiers is equal to 2.14.

The water/binder ratio is equal to 0.50, the percentage referring to the weight ratio water/total cementitious mixture ratio in powder form is 19.00%, whereas the binder/aggregate ratio is equal to 1.36 (wherein the binder consists of I 52.5 R-type cement, sulfoaluminate cement and the latent hydraulic addition GGBS).

At the end of the mixing, the cementitious mixture having the composition indicated in Table 4, was characterized by means of a rotational viscometer with a controlled rotation rate, model Schleibinger Viskomat XL, at a temperature of 20°C. The test allowed the torque of the material to be characterized within a rotation-rate range varying from a minimum value of 5 rpm to a maximum value of 60 rpm, by means of a step method. Each velocity value was maintained for 1 minute and the total duration of the test was 15 minutes. The torque value, obtained at a rotation rate of 5 rpm, proved to be equal to 1250 N.mm.

At the end of the mixing, the cementitious mixture was inserted into the hopper of the peristaltic pump model Umiblok Magic Plus P100 (as shown in Figure 6), with the help of a steel pestle to facilitate the flow of the cementitious mixture towards the feeding hole, then proceeding for pumping. This latter operation was carried out by setting the speed regulator of the pump at the minimum scale value.

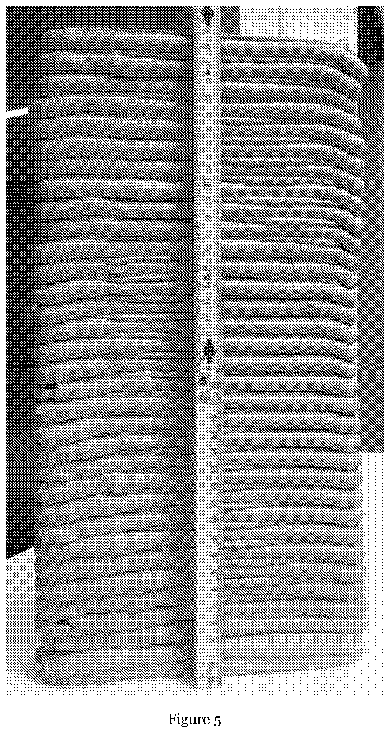

The mixture prepared as previously indicated was extruded using a straight double-layered printing path, having a length of 20 cm for each layer. The model was successfully printed (as shown in Figure 5) in a single printing session, applying the following printing parameters: Height of layer: 12.0 mm;

Printing speed: 36 mm/s;
Extrusion flow-rate: 51 Kg/h;
Nozzle geometry: 15 mm diameter.

The mechanical resistance to compression value at 8 hours proved to be equal to 7.6 MPa, whereas that at 24 hours was equal to 17.9 MPa, according to the loading ramp as described in EN 196-1:2016.

Example 5 (comparative)

A formulation of a cementitious mixture having the composition shown in the following Table 5 was prepared using a Hobart mixer, according to the following procedure:

- the solid components were mixed for 10 seconds at a rate of 140 rpm;
- water was then added and all the components were mixed for 2 minutes and 30 seconds at a rate of 140 rpm;
- the mixing was interrupted for 45 seconds to collect any material possibly remaining on the walls of the container;
- all the components were then mixed for 2 minutes at a rate of 140 rpm.

Table 5: Formulation extruded according to Example 5.

| Component | Composition (weight %) |
| --- | --- |
| Cement I 52.5 R | 18.13% |
| GGBS | 17.50% |
| Calcareous Filler | 33.40% |
| Silico-calcareous sand (0.00-0.200 mm) | 20.00% |
| Silico-calcareous sand (0.600-1.000 mm) | 10.00% |
| Superplasticizer | 0.13% |
| Rheology modifier 2 | 0.25% |
| Superplasticizer/(Rheology modifier 1+ Rheology modifier 2) | |
| Shrinkage reducing agent | 0.44% |
| Hydrophobic agent | 0.15% |
| Water/binder | 0.52 |
| Water/Total powder cementitious mixture | 18.5% |
| Binder/aggregate | 1.19 |

The cement is a cement of the type I 52.5 R coming from the Rezzato plant. The GGBS included in the formulation constitutes the latent hydraulic addition and is a granular blast furnace slag (GGBS: "ground grain ground slag") compliant with EN 15167-1:2006, having a specific surface equal to 4,450 $cm^2$/g (determined according to the Blaine method according to the standard EN 196-6: 2010), supplied by the company Ecocem with the trade-name of "Loppa di altoforno granulata macinata" (Ground granular blast furnace slag).

The calcareous filler is a high-purity filler, marketed by Omya Spa under the trade-name of Omyacarb 2-AV. The silico-calcareous aggregates were added in two fractions, a first fraction with a particle-size distribution ranging from 0.00 to 0.200 mm and a second fraction with a particle-size distribution ranging from 0.600 to 1.000 mm.

The superplasticizer is based on polycarboxylic ether, called Melflux 2641 F, and marketed by BASF. The rheology modifier 2 is a high-molecular-weight synthetic polymer, more specifically a polyamide with the amide nitrogen substituted with a molecular weight approximately equal to $2\times10^6$Da, called Starvis 3040F marketed by BASF.

The shrinkage reducing agent (SRA), called SRA04, is marketed by Neuvendis: it is a mixture of glycols and special surfactants. The hydrophobic agent is a silane-based additive, more specifically an alkyloxysilane, called SEAL 200, marketed by Elotex.

These four additives are in solid form.

The ratio between the superplasticizer and the sum of the two rheology modifiers was not calculated because the rheology modifier 1 is not present in the formula.

The water/binder ratio is equal to 0.52, the percentage referring to the weight ratio water/total cementitious mixture ratio in powder form is 18.50%, whereas the binder/aggregate ratio is equal to 1.19 (wherein the binder consists of cement and the latent hydraulic addition GGBS). At the end of mixing, the cementitious mixture proved to be extremely fluid, therefore not characterized by rheological behaviour suitable for being printed (the rheological test was not significant for the characterization of this formulation).

With the same maximum size of the aggregate (see examples 3 and 4), the greater fluidity of the cementitious mixture of Example 5 derives from the fact that only rheology modifier 2 is present, i.e. the high-molecular-weight polyamide (Starvis), without cellulose. It is thanks to the system of rheology modifiers according to the present invention, in fact, that the cementitious mixture has the necessary rheological properties.

Example 6 (comparative)

A formulation of a cementitious mixture having the composition shown in the following Table 6 was prepared using a Hobart mixer, according to the following procedure:

- the solid components were mixed for 10 seconds at a rate of 140 rpm;
- water was then added and all the components were mixed for 2 minutes and 30 seconds at a rate of 140 rpm;
- the mixing was interrupted for 45 seconds to collect any material possibly remaining on the walls of the container;
- all the components were then mixed for 2 minutes at a rate of 140 rpm.

Table 6: Formulation extruded according to Example 6.

| Component | Composition (weight %) |
|---|---|
| Cement I 52.5 R | 18.13% |
| GGBS | 17.50% |
| Calcareous Filler | 33.55% |
| Silico-calcareous sand (0.00-0.200 mm) | 20.00% |
| Silico-calcareous sand (0.600-1.000 mm) | 10.00% |
| Superplasticizer | 0.13% |
| Rheology modifier 1 | 0.1% |
| Superplasticizer/(Rheology modifier 1 + Rheology modifier 2) | |
| Shrinkage reducing agent | 0.44% |
| Hydrophobic agent | 0.15% |
| Water/binder | 0.52 |
| Water/Total powder cementitious mixture | 18.5% |
| Binder/aggregate | 1.19 |

The cement is a cement of the type I 52.5 R coming from the Rezzato plant. The GGBS included in the formulation constitutes the latent hydraulic addition and is a granular blast furnace slag (GGBS: "ground grain ground slag") compliant with EN 15167-1:2006, having a specific surface equal to 4,450 $cm^2$/g (determined according to the Blaine method according to the standard EN 196-6: 2010), supplied by the company Ecocem with the trade-name of "Loppa di altoforno granulata macinata" (Ground granular blast furnace slag).

The calcareous filler is a high-purity filler, marketed by Omya Spa under the trade-name of Omyacarb 2-AV. The silico-calcareous aggregates were added in two fractions, a first fraction with a particle-size distribution ranging from 0.00 to 0.200 mm and a second fraction with a particle-size distribution ranging from 0.600 to 1.000 mm.

The superplasticizer is based on polycarboxylic ether, called Melflux 2641 F, and marketed by BASF. The rheology modifier 1 is a hydroxymethylethylcellulose called *"Tylose MH 60004 P6"* marketed by ShinEtsu.

The shrinkage reducing agent (SRA), called SRA04, is marketed by Neuvendis: it is a mixture of glycols and special surfactants. The hydrophobic agent is a silane-based additive, more specifically an alkyloxysilane, called SEAL 200, marketed by Elotex.

These four additives are in solid form. The ratio between the superplasticizer and the sum of the two rheology modifiers was not calculated because the rheology modifier 2 is not present in the formula.

The water/binder ratio is equal to 0.52, the percentage referring to the weight ratio water/total cementitious mixture ratio in powder form is 18.50%, whereas the binder/aggregate ratio is equal to 1.19 (wherein the binder consists of cement and the latent hydraulic addition GGBS). At the end of mixing, the material resulted stiff and rubbery. For this reason, it was not possible to perform the rheological tests because the limit torque value of the equipment (3000 N.mm) was exceeded by the initial torque of the material. Therefore, the material presented a higher torque with respect to the one characterizing the material in order to be processed according to the present invention.

Example 7

A formulation of a cementitious mixture having the composition shown in the following Table 7 was prepared using a Hobart mixer, according to the following procedure:

- the solid components were mixed for 10 seconds at a rate of 140 rpm;
- water was then added and all the components were mixed for 2 minutes and 30 seconds at a rate of 140 rpm;
- the mixing was interrupted for 45 seconds to collect any material possibly remaining on the walls of the container;
- all the components were then mixed for 2 minutes at a rate of 140 rpm.

Table 7: Formulation extruded according to Example 7.

| Component | Composition (weight %) |
| --- | --- |
| Cement I 52.5 R | 17.50% |
| GGBS | 17.50% |
| Calcareous Filler | 22.20% |
| Silico-calcareous sand (0.00-0.200 mm) | 9.40% |
| Silico-calcareous sand (0.600-1.000 mm) | 23.00% |
| Silico-calcareous sand (1.000-1.500 mm) | 9.70% |
| Superplasticizer | 0.06% |
| Rheology modifier 1 | 0.01% |
| Rheology modifier 2 | 0.06% |
| Superplasticizer/(Rheology modifier 1 + Rheology modifier 2) | 0.86 |
| Shrinkage reducing agent | 0.44% |
| Hydrophobic agent | 0.15% |
| Water/binder | 0.47 |
| Water/Total powder cementitious mixture | 16.50% |
| Binder/aggregate | 0.85 |

The cement is a cement of the type I 52.5 R coming from the Rezzato plant. The GGBS included in the formulation constitutes the latent hydraulic addition and is a granular blast furnace slag (GGBS: "ground grain ground slag") compliant with EN 15167-1:2006, having a specific surface equal to 4,450 $cm^2$/g (determined according to the Blaine method according to the standard EN 196-6: 2010), supplied by the company Ecocem with the trade-name of "Loppa di altoforno granulata macinata" (Ground granular blast furnace slag).

The calcareous filler is a high-purity filler, marketed by Omya Spa with the trade-name of Omyacarb 2-AV. The silico-calcareous aggregates were added in three fractions, a first fraction with a particle-size distribution ranging from 0.00 to 0.200 mm, a second fraction with a particle-size distribution ranging from 0.600 to 1.000 mm and a third fraction with a particle-size distribution ranging from 1.000 to 1.500 mm.

The superplasticizer is based on polycarboxylic ether, called Melflux 2641 F, and marketed by BASF. The rheology modifier 1 is a hydroxymethylethylcellulose called *"Tylose MH 60004 P6"* marketed by ShinEtsu. The rheology modifier 2 is a high-molecular-weight synthetic polymer, more specifically a polyamide with the amide nitrogen substituted with a molecular weight approximately equal to $2 \times 10^6$ Da, called Starvis 3040F marketed by BASF.

The shrinkage reducing agent (SRA), called SRA04, is marketed by Neuvendis; this is a mixture of glycols and special surfactants. The hydrophobic agent is a silane-based additive, more specifically an alkyl-oxysilane, called SEAL 200, marketed by Elotex.

These five additives are in solid form. The ratio between the superplasticizer and the sum of the two rheology modifiers is equal to 0.86

The water/binder ratio is equal to 0.47, the percentage referring to the weight ratio water/total cementitious mixture in powder form is 16.50%, whereas the binder/aggregate ratio is equal to 0.85 (wherein the binder is composed of cement and the latent hydraulic addition GGBS).

At the end of the mixing, the cementitious mixture having the composition indicated in Table 7, was characterized by means of a rotational viscometer with a controlled rotation rate, model Schleibinger Viskomat XL, at a temperature of 20°C. The test allowed the torque of the material to be characterized within a rotation-rate range varying from a minimum value of 5 rpm to a maximum value of 60 rpm, by means of a step method. Each velocity value was maintained for 1 minute and the total duration of the test was 15 minutes. The torque value, obtained at a rotation rate of 5 rpm, proved to be equal to 1344 N.mm, thus resulting compliant with the torque range expected by the present invention.

At the end of the mixing, the cementitious mixture was inserted into a cylindrical gas-pressurized supply tank with the help of a spatula and arranged so as to completely fill the container reducing the air trapped in the material as much as possible. The cylindrical gas-pressurized supply tank contains a piston which pushes the fluid, i.e. the cementitious mixture; the pressure is supplied by pressurized air, directly connected to the tank and regulated by a pressure gauge. The cylindrical gas-pressurized supply tank was thus prepared for being connected to the extruder mounted on the printing machine, using a flexible plastic tube. This tube connects the pump-tank system to the extruder and it is characterized by a circular section, with an internal diameter of 20 mm and a length ranging from 1.5 to 3 m. The tank pressure was set at 6.0 bars.

The mixture prepared as previously indicated was extruded using a triple-layered spiral printing path, having a geometry deriving from a cylinder. The model was successfully printed in a single printing session, applying the following printing parameters:

Height of layer: 8.0 mm;
Printing speed: 25 mm/s;
Nozzle geometry: 10 mm diameter.

The mechanical resistance to compression value at 24 hours proved to be equal to 17.0 MPa, according to the loading ramp as described in EN 196-1:2016.

BIBLIOGRAPHY:

[1] *"Additive manufacturing - Turning manufacturing inside out"*, Peter Wray, American Ceramic Society Bulletin, Vol. 93, No. 3, 2014.

[2] ASTM Standard F2792 - 12a.

[3] S. Lim, R.A. Buswell, T.T. Le, S. Austin, A.G. Gibb, T. Thorpe, "Development in construction-scale additive manufacturing process", 2012, Automation Construction, 21:262268.

[4] R.A. Buswell, R.C. Soar, A.G.F. Gibb, A. Thorpe, "Freeform construction: mega-scale rapid manufacturing for construction", 16, 2007, Automation in Construction, pages 224-231.

[5] T.T. Le, S.A. Austin, S. Lim, R.A. Buswell, A.G.F. Gibb, T. Thorpe, "Mix design and fresh properties for high-performance printing concrete", 45, 2012, Materials and Structures, pages 1221-1232.

[6] B. Khoshnevis, D. Hwang, K.T. Yao, Z. Yeh, "Mega-Scale fabrication by contour crafting", Industrial and Systems Engineering international journal, Vol. 1, No. 3, 301-320, 2006.

[7] D. Hwang, B. Khoshnevis, "Concrete wall fabrication by contour crafting", proceedings of the 21st International Symposium on Automation and Robotics in Construction (ISARC 2004), Jeju, South Korea, 2004.

[8] B. Khoshnevis, "Automated construction by contour crafting-related robotics and information technologies", Automation in Construction, Vol.13, No. 1, 5-19., 2004.

[9] Frankson, Lies, "Printing your dream house: innovations in construction", IMIESA, Vol. 40, No. 4, 33-34, 2015.
[10] Hüsken G., Brouwers H.J.H, "On the early-age behavior of zero-slump concrete", Cement and Concrete Research 42 (2012) 501-510.

**Claims**

1. A cementitious mixture for a 3D printer which comprises a) cement or hydraulic binder, b) latent hydraulic addition, c) filler, d) aggregates, e) additives, f) water, said mixture being **characterized in that**

   component c) i.e. the filler, in accordance with standard UNI EN 12620-1: 2008, selected from calcareous, silica or silico-calcareous fillers, preferably calcareous fillers, alone or in a mixture, has a particle size which is such that 90% by weight of the filler passes through an 0.063 mm sieve;
   component d) is present in a quantity ranging from 10% to 80% by weight, preferably from 25% to 50% by weight, with respect to the total weight of the cementitious mixture, and is composed of calcareous, silica or silico-calcareous aggregates, in accordance with standard UNI EN 206: 2014, alone or in a mixture, having a particle size with a maximum diameter less than or equal to 2 mm, said component d) being composed of one or more fractions having a particle size with a diameter greater than 0.2 mm, preferably with a diameter greater than 0.6 mm, and a fraction having a particle size with a diameter less than or equal to 0.2 mm and such that less than 2% by weight passes through an 0.063 mm sieve;
   component e) comprises superplasticizers and at least two rheology modifiers, and possibly shrinkage reducing agents and hydrophobic agents, said cementitious mixture being **characterized by** a torque value ranging from 1,000 N·mm to 2,100 N·mm, measured by a rotational viscometer, model Schleibinger Viskomat XL, with a fixed blade at a rotation rate of 5 rpm and at a temperature of 20°C.

2. The cementitious mixture according to claim 1, wherein the ratio between the superplasticizer and the two rheology modifiers, simultaneously present, ranges between 0.6 and 2.3, preferably between 0.7 and 1.2.

3. The cementitious mixture according to claim 1, comprising or composed of:

   a) from 10% to 70% by weight of hydraulic binder or cement, preferably selected from Portland cement, sulfoaluminate cement and/or aluminous cement and/or quick-setting natural cement, alone or mixed with each other; more preferably Portland cement alone or in a mixture with sulfoaluminate cement;
   b) from 0.5% to 25% by weight, preferably from 0.5% to 20% by weight, of a natural or artificial hydraulic addition, preferably granulated blast-furnace slag, having a specific surface ranging from 3,500 cm$^2$/g to 6,500 cm$^2$/g, determined according to the Blaine method according to EN 196-6:2010, preferably from 4,000 cm$^2$/g to 5,000 cm$^2$/g;
   c) from 10% to 50% by weight, preferably from 15% to 40% by weight, of a filler, selected from calcareous, silica or silico-calcareous fillers, preferably calcareous fillers, alone or mixed with each other, having a particles size which is such that 90% by weight of the filler passes through an 0.063 mm sieve;
   d) from 10% to 80% by weight, preferably from 25% to 50% by weight, of calcareous, silica or silico-calcareous aggregates, alone or mixed with each other, having a particle size with a maximum diameter less than or equal to 2 mm, said component d) being composed of one or more fractions having a particle size greater than 0.2 mm, preferably with a diameter greater than 0.6 mm, and a fraction having a particle size with a diameter less than or equal to 0.2 mm and which is such that less than 2% by weight passes through an 0.063 mm sieve;
   e) from 0.01% to 1.5% by weight, preferably from 0.05% to 0.8% by weight, of a superplasticizer selected from superplasticizers such as acrylic-based polycarboxylates, lignosulfonates, naphthalene sulfonates, melamine or vinyl compounds, more preferably polycarboxylic ethers; from 0.009% to 0.5% by weight, preferably from 0.01% to 0.3% by weight, of a rheology modifying agent which is a polyamide having a MW ranging from $2 \times 10^6$Da to $2 \times 10^7$Da, preferably from $2 \times 10^6$Da to $5 \times 10^6$Da; from 0.005% to 1.0% by weight, preferably from 0.008% to 0.50% by weight, of a rheology modifying agent selected from cellulose or its derivatives, preferably hydroxymethylethyl cellulose; from 0.0% to 1.0% by weight, preferably from 0.3% to 0.6% by weight, of a shrinkage reducing agent; from 0.0% to 0.5%, preferably from 0.05 to 0.30%, more preferably from 0.10% to 0.30% of a hydrophobic additive selected from silicone or silane derivatives and/or mixtures thereof, preferably an alkyloxysilane,
   wherein the binder/aggregate weight ratio ranges from 0.4 to 2.0, preferably from 0.55 to 1.4, the binder being composed of components a) and b) of the cementitious mixture,
   wherein the ratio between the superplasticizer and the two rheology modifiers, simultaneously present, ranges between 0.6 and 2.3, preferably between 0.7 and 1.2;
and said mixture has a torque value ranging from 1,000 N.mm to 2,100 N·mm, measured at a rotation rate of 5 rpm and at a temperature of 20°C.

4. The cementitious mixture according to any of the previous claims, wherein the water/binder weight ratio ranges from 0.25 to 0.8, preferably from 0.35 to 0.6, the binder being composed of components a) and b) of the cementitious mixture.

5. The cementitious mixture according to any of the previous claims, wherein the weight ratio water/total cementitious mixture in powder form is within the range of 15% to 21%, preferably from 15.5% to 19.5%.

6. The cementitious mixture according to one or more of the previous claims, wherein component a) of the mixture is selected from CEM I 52.5 R or CEM I 52.5 N or sulfoaluminate cement or mixtures thereof, preferably CEM I 52.5 R or sulfoaluminate cement, more preferably CEM I 52.5 R alone or in a mixture with sulfoaluminate cement.

7. The cementitious mixture according to one or more of the previous claims, wherein component b) of the mixture is granulated blast-furnace slag, having a specific surface ranging from 3,500 $cm^2/g$ to 6,500 $cm^2/g$, determined according to the Blaine method according to EN 196-6:2010, preferably from 4,000 $cm^2/g$ to 5,000 $cm^2/g$.

8. The cementitious mixture according to any of the previous claims, comprising or composed of:

a) from 10% to 70% by weight of hydraulic binder or cement, selected from CEM I 52.5 R or CEM I 52.5 N or sulfoaluminate cement or mixtures thereof, preferably CEM I 52.5 R or sulfoaluminate cement, more preferably CEM I 52.5 R alone or in a mixture with sulfoaluminate cement;
b) from 0.5% to 20% by weight of granulated blast-furnace slag, having a specific surface ranging from 4,000 $cm^2/g$ to 5,000 $cm^2/g$, determined according to the Blaine method according to EN 196-6:2010;
c) from 15% to 40% by weight of a calcareous filler having a particles size which is such that 90% by weight of the filler passes through an 0.063 mm sieve;
d) from 25% to 50% by weight of calcareous, silica or silico-calcareous aggregates, alone or in a mixture, having a particle size with a maximum diameter less than or equal to 2 mm, said component d) being composed of one or more fractions having a particle size greater than 0.2 mm, preferably with a diameter greater than 0.6 mm, and a fraction having a particle size with a diameter less than or equal to 0.2 mm and which is such that less than 2% by weight passes through an 0.063 mm sieve;
e) from 0.05% to 0.8% by weight of a superplasticizerbased on polycarboxylic ether; from 0.01% to 0.3% by weight of a rheology modifying agent which is a polyamide with the amide nitrogen substituted and having a MW ranging from $2 \times 10^6$ Da to $5 \times 10^6$ Da; from 0.008% to 0.50% by weight of a rheology modifying agent which is hydroxymethylethyl cellulose; from 0.3% to 0.6% by weight of a shrinkage reducing agent; from 0.10% to 0.30% of a hydrophobic additive selected from silicone or silane derivatives and/or mixtures thereof, preferably an alkyloxysilane, more preferably, triethoxy(octyl)silane,
wherein the binder/aggregate weight ratio ranges from 0.55 to 1.4, the binder being composed of components a) and b) of the cementitious mixture,
wherein the ratio between the superplasticizer and the two rheology modifiers, simultaneously present, ranges between 0.7 and 1.2;
and said mixture has a torque value ranging from 1,000 N-mm to 2,100 N·mm, measured at a rotation rate of 5 rpm and at a temperature of 20°C.

9. Use of a cementitious mixture according to one or more of the previous claims 1-8, as extrusion material in a 3D printer.

10. A 3D printing process comprising the following steps:

- preparation of a cementitious mixture according to one or more of claims 1 to 8;
- feeding the cementitious mixture to a 3D printing apparatus;
- extrusion of the cementitious mixture from the 3D printer by means of an extruder suitable for extruding the mixture;
- printing the 3D model by the deposition of consecutive layers of cementitious mixture.

11. A finished product having a complex geometry obtained by means of 3D printing with an apparatus fed with a cementitious mixture according to any one of the claims from 1 to 8.

**Patentansprüche**

1. Zementhaltige Mischung für einen 3D-Drucker, die a) Zement oder hydraulisches Bindemittel, b) latent hydraulischen Zusatz, c) Füllstoff, d) Zuschlagstoffe, e) Additive, f) Wasser umfasst, wobei die Mischung **dadurch gekennzeichnet, dass**

Komponente c), d.h. der Füllstoff, gemäß der Norm UNI EN 12620-1: 2008, ausgewählt aus kalkartigen, kieselsäurehaltigen oder kiesel- und kalkartigen Füllstoffen, vorzugsweise kalkartigen Füllstoffen, allein oder in einer Mischung, eine Partikelgröße aufweist, die so bemessen ist, dass 90 Gew.-% des Füllstoffs ein 0,063-mm-Sieb passiert;

Komponente d) in einer Menge im Bereich von 10 bis 80 Gew.-%, vorzugsweise von 25 bis 50 Gew.-%, bezogen auf das Gesamtgewicht der zementhaltigen Mischung, vorhanden ist und besteht aus kalkartigen, kieselsäurehaltigen oder kiesel- und kalkartigen Zuschlagstoffen gemäß der Norm Uni EN 206: 2014, allein oder in einer Mischung, mit einer Partikelgröße mit einem maximalen Durchmesser kleiner als oder gleich 2 mm, wobei Komponente d) aus einer oder mehreren Fraktionen mit einer Partikelgröße mit einem Durchmesser größer als 0,2 mm, vorzugsweise mit einem Durchmesser größer als 0,6 mm, und einer Fraktion mit einer Partikelgröße mit einem Durchmesser kleiner als oder gleich 0,2 mm besteht, so dass weniger als 2 Gew.-% ein 0,063 mm Sieb passiert;

Komponente e) Superweichmacher und mindestens zwei Rheologiemodifikatoren sowie möglicherweise Schwindreduktionsmittel und hydrophobe Mittel umfasst, wobei die zementhaltige Mischung durch einen Drehmomentwert im Bereich von 1.000 N·mm bis 2.100 N·mm gekennzeichnet ist, gemessen mit einem Rotationsviskosimeter, Modell Schleibinger Viskomat XL, mit einer festen Schaufel bei einer Drehzahl von 5 U/min und einer Temperatur von 20 °C.

2. Zementartige Mischung nach Anspruch 1, wobei das Verhältnis vom Superweichmacher zu den beiden gleichzeitig vorhandenen Rheologiemodifikatoren zwischen 0,6 und 2,3, vorzugsweise zwischen 0,7 und 1,2, liegt.

3. Zementartige Mischung nach Anspruch 1, umfassend oder bestehend aus:

a) von 10 bis 70 Gew.-% hydraulischen Bindemittels oder Zements, vorzugsweise ausgewählt aus Portlandzement, Sulfoaluminatzement und/oder Tonerdeschmelzzement und/oder schnell abbindendem Naturzement, allein oder miteinander vermischt; bevorzugter Portlandzement allein oder in Mischung mit Sulfoaluminatzement;

b) von 0,5 bis 25 Gew.-%, vorzugsweise von 0,5 bis 20 Gew.-% eines natürlichen oder künstlichen hydraulischen Zusatzes, vorzugsweise granulierte Hochofenschlacke, mit einer spezifischen Oberfläche im Bereich von 3.500 $cm^2$/g bis 6.500 $cm^2$/g, bestimmt nach der Blaine-Methode nach EN 196-6:2010, vorzugsweise von 4.000 $cm^2$/g bis 5.000 $cm^2$/g;

c) von 10 bis 50 Gew.-%, vorzugsweise von 15 bis 40 Gew.-% eines Füllstoffs, ausgewählt aus kalk-, kieselsäure- oder kiesel- und kalkartigen Füllstoffen, vorzugsweise kalkartigen Füllstoffen, allein oder in Mischung miteinander, mit einer Partikelgröße, die so bemessen ist, dass 90 Gew.-% des Füllstoffs ein 0,063-mm-Sieb passiert;

d) von 10 bis 80 Gew.-%, vorzugsweise von 25 bis 50 Gew.-%, kalk-, kieselsäure- oder kiesel- und kalkartiger Zuschlagstoffe, allein oder in Mischung miteinander, mit einer Partikelgröße mit einem maximalen Durchmesser kleiner oder gleich 2 mm, wobei die Komponente d) aus einer oder mehreren Fraktionen mit einer Partikelgröße größer als 0,2 mm, vorzugsweise mit einem Durchmesser größer als 0,6 mm, und einer Fraktion mit einer Partikelgröße mit einem Durchmesser kleiner oder gleich 0,2 mm besteht, die so bemessen ist, dass weniger als 2 Gew.-% ein 0,063-mm-Sieb passiert;

e) von 0,01 bis 1,5 Gew.-%, vorzugsweise von 0,05 bis 0,8 Gew.-%, eines Superweichmachers, ausgewählt aus Superweichmachern wie Polycarboxylaten auf Acrylbasis, Ligninsulfonaten, Naphthalinsulfonaten, Melamin oder Vinylverbindungen, bevorzugter Polycarbonsäureethern; von 0,009 bis 0,5 Gew.-%, vorzugsweise von 0,01 bis 0,3 Gew.-%, eines rheologiemodifizierenden Mittels, das ein Polyamid mit einem MG im Bereich von $2 \times 10^6$ Da bis $2 \times 10^7$ Da, vorzugsweise von $2 \times 10^6$ Da bis $5 \times 10^6$ Da ist; von 0,005 bis 1,0 Gew.-%, vorzugsweise von 0,008 bis 0,50 Gew.-%, eines rheologiemodifizierenden Mittels, ausgewählt aus Cellulose oder ihren Derivaten, vorzugsweise Hydroxymethylethylcellulose; von 0,0 bis 1,0 Gew.-%, vorzugsweise von 0,3 bis 0,6 Gew.-%, eines Schwindreduktionsmittels; von 0,0 bis 0,5 %, vorzugsweise von 0,05 bis 0,30 %, bevorzugter von 0,10 bis 0,30 %, eines hydrophoben Additivs, ausgewählt aus Silikon- oder Silanderivaten und/oder Mischungen davon, vorzugsweise eines Alkyloxysilans,

wobei das Gewichtsverhältnis Bindemittel/Zuschlagstoff im Bereich von 0,4 bis 2,0, vorzugsweise von 0,55 bis 1,4 liegt, wobei das Bindemittel aus den Komponenten a) und b) der zementhaltigen Mischung besteht,

wobei das Verhältnis vom Superweichmacher zu den beiden gleichzeitig vorhandenen Rheologiemodifikatoren im Bereich zwischen 0,6 und 2,3, vorzugsweise zwischen 0,7 und 1,2 liegt; und die Mischung einen Drehmomentwert im Bereich von 1.000 N·mm bis 2.100 N·mm aufweist, gemessen bei einer Drehzahl von 5 U/min und bei einer Temperatur von 20 °C.

4. Zementhaltige Mischung nach einem der vorhergehenden Ansprüche, wobei das Gewichtsverhältnis Wasser/Bindemittel im Bereich von 0,25 bis 0,8, vorzugsweise von 0,35 bis 0,6, liegt und das Bindemittel aus den Komponenten a) und b) der zementhaltigen Mischung besteht.

5. Zementmischung nach einem der vorhergehenden Ansprüche, wobei das Gewichtsverhältnis Wasser/zementhaltige Gesamtmischung in Pulverform im Bereich von 15% bis 21%, vorzugsweise von 15,5% bis 19,5% liegt.

6. Zementhaltige Mischung nach einem oder mehreren der vorhergehenden Ansprüche, wobei Komponente a) der Mischung aus CEM I 52.5 R oder CEM I 52.5 Nor Sulfoaluminatzement oder Mischungen davon, bevorzugt CEM I 52.5 R oder Sulfoaluminatsement, bevorzugter CEM I 52.5 R allein oder in einer Mischung mit Sulfoaluminatzement ausgewählt ist.

7. Zementhaltige Mischung nach einem oder mehreren der vorhergehenden Ansprüche, wobei Komponente b) der Mischung granulierte Hochofenschlacke mit einer spezifischen Oberfläche im Bereich von 3.500 $cm^2$/g bis 6.500 $cm^2$/g, bestimmt nach der Blaine-Methode gemäß EN 196-6:2010, vorzugsweise von 4.000 $cm^2$/g bis 5.000 $cm^2$/g, ist.

8. Zementartige Mischung nach einem der vorhergehenden Ansprüche, umfassend oder bestehend aus:

a) von 10 bis 70 Gew.-% hydraulischen Bindemittels oder Zements, ausgewählt aus CEM I 52,5 R oder CEM I 52,5 N oder Sulfoaluminatzement oder Mischungen davon, vorzugsweise CEM I 52,5 R oder Sulfoaluminatzement, bevorzugter CEM I 52,5 R allein oder in einer Mischung mit Sulfoaluminatzement;
b) von 0,5 bis 20 Gew.-% granulierter Hochofenschlacke mit einer spezifischen Oberfläche im Bereich von 4.000 $cm^2$/g bis 5.000 $cm^2$/g, bestimmt nach der Blaine-Methode nach EN 196-6:2010;
c) von 15 bis 40 Gew.-% eines kalkartigen Füllstoffs mit einer Partikelgröße, die so bemessen ist, dass 90 Gew.-% des Füllstoffs ein 0,063-mm-Sieb passiert;
d) von 25 bis 50 Gew.-% kalk-, kieselsäure- oder kiesel- und kalkartiger Zuschlagstoffe, allein oder in Mischung, mit einer Partikelgröße mit einem maximalen Durchmesser kleiner oder gleich 2 mm, wobei die Komponente d) aus einer oder mehreren Fraktionen mit einer Partikelgröße größer als 0,2 mm, vorzugsweise mit einem Durchmesser größer als 0,6 mm, und einer Fraktion mit einer Partikelgröße mit einem Durchmesser kleiner oder gleich 0,2 mm besteht, die so bemessen ist, dass weniger als 2 Gew.-% ein 0,063 mm Sieb passiert;
e) von 0,05 bis 0,8 Gew.-% eines Superweichmachers auf Basis von Polycarbonsäureether; von 0,01 bis 0,3 Gew.-% eines rheologiemodifizierenden Mittels, das ein Polyamid mit substituiertem Amidstickstoff ist und ein MG im Bereich von $2 \times 10^6$ Da bis $5 \times 10^6$ Da aufweist; von 0,008 bis 0,50 Gew.-% eines rheologiemodifizierenden Mittels, das Hydroxymethylethylcellulose ist; von 0,3 bis 0,6 Gew.-% eines Schwindreduktionsmittels; von 0,10 bis 0,30 % eines hydrophoben Additivs, ausgewählt aus Silikon- oder Silanderivaten und/oder Mischungen davon, vorzugsweise eines Alkyloxysilans, bevorzugter Triethoxy(octyl)silans,
wobei das Gewichtsverhältnis Bindemittel/Zuschlagstoff im Bereich von 0,55 bis 1,4 liegt, wobei das Bindemittel aus den Komponenten a) und b) der zementhaltigen Mischung besteht,
wobei das Verhältnis vom Superweichmacher zu den beiden gleichzeitig vorhandenen Rheologiemodifikatoren zwischen 0,7 und 1,2 liegt;
und die Mischung einen Drehmomentwert im Bereich von 1.000 N-mm bis 2.100 N-mm aufweist, gemessen bei einer Drehzahl von 5 U/min und bei einer Temperatur von 20 °C.

9. Verwendung einer zementhaltigen Mischung nach einem oder mehreren der vorhergehenden Ansprüche 1-8 als Extrusionsmaterial in einem 3D-Drucker.

10. 3D-Druckverfahren, das die folgenden Schritte umfasst:

- Herstellung einer zementhaltigen Mischung nach einem oder mehreren der Ansprüche 1 bis 8;
- Zuführen der zementhaltigen Mischung zu einer 3D-Druckvorrichtung;
- Extrusion der zementhaltigen Mischung aus dem 3D-Drucker mittels eines zum Extrudieren der Mischung geeigneten Extruders;

- Drucken des 3D-Modells durch Abscheidung aufeinanderfolgender Schichten zementhaltiger Mischung.

**11.** Fertigprodukt mit einer komplexen Geometrie, erhalten mittels 3D-Druck mit einer Vorrichtung, die mit einer zementhaltigen Mischung nach einem der Ansprüche 1 bis 8 beschickt wird.

**Revendications**

**1.** Mélange cimentaire pour imprimante 3D comprenant a) du ciment ou un liant hydraulique, b) une addition hydraulique latente, c) une charge, d) des agrégats, e) des additifs, f) de l'eau, ledit mélange étant **caractérisé en ce que**

le composant c), c'est-à-dire la charge, conformément à la norme UNI EN 12620-1: 2008, choisie parmi les charges calcaires, siliceuses ou silico-calcaires, de préférence les charges calcaires, seules ou en mélange, présente une granulométrie telle que 90 % en poids de la charge passe à travers un tamis de 0,063 mm ;
le composant d) est présent en une quantité allant de 10 % à 80 %, de préférence de 25 % à 50 % en poids, par rapport au poids total du mélange cimentaire, et est composé d'agrégats calcaires, siliceux ou silico-calcaires, conformément à la norme UNI EN 206: 2014, seul ou en mélange, ayant une granulométrie d'un diamètre maximal inférieur ou égal à 2 mm, ledit composant d) étant composé d'une ou plusieurs fractions ayant une granulométrie d'un diamètre supérieur à 0,2 mm, de préférence d'un diamètre supérieur à 0,6 mm, et d'une fraction ayant une granulométrie d'un diamètre inférieur ou égal à 0,2 mm et telle que moins de 2 % en poids passe à travers un tamis de 0,063 mm ;
le composant e) comprend des superplastifiants et au moins deux modificateurs de rhéologie, et éventuellement des agents réducteurs de retrait et des agents hydrophobes, ledit mélange cimentaire étant **caractérisé par** une valeur de couple allant de 1 000 N-mm à 2 100 N-mm, mesurée par un viscosimètre rotatif, modèle Schleibinger Viskomat XL, avec une lame fixe à une vitesse de rotation de 5 tours par minute et à une température de 20°C.

**2.** Mélange cimentaire selon la revendication 1, dans lequel le rapport entre le superplastifiant et les deux modificateurs de rhéologie, présents simultanément, varie entre 0,6 et 2,3, de préférence entre 0,7 et 1,2.

**3.** Mélange cimentaire selon la revendication 1, comprenant ou composé de :

a) de 10 % à 70 % en poids de liant hydraulique ou de ciment, de préférence choisi parmi le ciment Portland, le ciment sulfoalumineux et/ou le ciment alumineux et/ou le ciment naturel à prise rapide, seuls ou mélangés entre eux ; plus préférentiellement le ciment Portland seul ou en mélange avec le ciment sulfoalumineux ;
b) de 0,5 % à 25 % en poids, de préférence de 0,5 % à 20 % en poids, d'un ajout hydraulique naturel ou artificiel, de préférence du laitier de haut fourneau granulé, ayant une surface spécifique allant de 3 500 cm$^2$/g à 6 500 cm$^2$/g, déterminée selon la méthode Blaine selon la norme EN 196-6:2010, de préférence de 4000 cm$^2$/g à 5 000 cm$^2$/g ;
c) de 10 à 50% en poids, de préférence de 15 % à 40 % en poids, d'une charge, choisie parmi les charges calcaires, siliceuses ou silico-calcaires, de préférence les charges calcaires, seules ou mélangées entre elles, ayant une granulométrie telle que 90 % en poids de la charge passe à travers un tamis de 0,063 mm ;
d) de 10 % à 80 % en poids, de préférence de 25 % à 50 % en poids, d'agrégats calcaires, siliceux ou silico-calcaires, seuls ou mélangés entre eux, ayant une granulométrie d'un diamètre maximal inférieur ou égal à 2 mm, ledit composant d) étant composé d'une ou plusieurs fractions ayant une granulométrie supérieure à 0,2 mm, de préférence d'un diamètre supérieur à 0,6 mm, et d'une fraction ayant une granulométrie d'un diamètre inférieur ou égal à 0,2 mm et telle que moins de 2 % en poids passe à travers un tamis de 0,063 mm ;
e) de 0,01 % à 1,5 % en poids, de préférence de 0,05 % à 0,8 % en poids, d'un superplastifiant choisi parmi les superplastifiants tels que les polycarboxylates à base d'acrylique, les lignosulfonates, les sulfonates de naphtalène, la mélamine ou les composés vinyliques, plus préférentiellement les éthers polycarboxyliques ; de 0.009 % à 0,5 % en poids, de préférence de 0,01 % à 0,3 % en poids, d'un agent modificateur de rhéologie qui est un polyamide ayant un MW allant de $2 \times 10^6$Da à $2 \times 10^7$Da, de préférence de $2 \times 10^6$Da à $5 \times 10^6$Da ; de 0.005 % à 1,0 % en poids, de préférence de 0,008 % à 0,50 % en poids, d'un agent modificateur de rhéologie choisi parmi la cellulose ou ses dérivés, de préférence l'hydroxyméthyléthylcellulose ; de 0,0 % à 1,0 % en poids, de préférence de 0,3 % à 0.6 % en poids, d'un agent réducteur de retrait ; de 0,0 % à 0,5 %, de préférence de 0,05 à 0,30 %, plus préférentiellement de 0,10 % à 0,30 % d'un additif hydrophobe choisi parmi les dérivés de silicones ou de silanes et/ou leurs mélanges, de préférence un alkyloxysilane,
dans lequel le rapport pondéral liant/granulat varie de 0,4 à 2,0, de préférence entre 0,55 et 1,4, le liant étant composé des composants a) et b) du mélange cimentaire,
dans lequel le rapport entre le superplastifiant et les deux modificateurs de rhéologie, présents simultanément, varie entre 0,6 et 2,3, de préférence entre 0,7 et 1,2 ;
et ledit mélange a une valeur de couple comprise entre 1 000 N-mm et 2 100 N-mm, mesurée à une vitesse de rotation de 5 tours par minute et à une température de 20°C.

4. Mélange cimentaire selon l'une quelconque des revendications précédentes, dans lequel le rapport pondéral eau/liant varie de 0,25 à 0,8, de préférence de 0,35 à 0,6, le liant étant composé des composants a) et b) du mélange cimentaire.

5. Mélange cimentaire selon l'une quelconque des revendications précédentes, dans lequel le rapport pondéral eau/mélange cimentaire total sous forme de poudre est dans la plage de 15 % à 21 %, de préférence de 15,5 % à 19,5 %.

6. Mélange cimentaire selon l'une ou plusieurs des revendications précédentes, dans lequel le composant a) du mélange est choisi parmi le CEM I 52.5 R ou le CEM I 52.5 Nor ciment sulfoaluminate ou leurs mélanges, de préférence le CEM I 52.5 R ou le ciment sulfoaluminate, plus préférentiellement le CEM I 52.5 R seul ou en mélange avec le ciment sulfoaluminate.

7. Mélange cimentaire selon l'une ou plusieurs des revendications précédentes, dans lequel le composant b) du mélange est du laitier de haut fourneau granulé, ayant une surface spécifique allant de 3 500 cm$^2$/g à 6500 cm$^2$/g, déterminée selon la méthode Blaine selon la norme EN 196-6:2010, de préférence de 4000 cm$^2$/g à 5 000 cm$^2$/g.

8. Mélange cimentaire selon l'une quelconque des revendications précédentes, comprenant ou composé de :

   a) de 10 % à 70 % en poids de liant hydraulique ou de ciment, choisi parmi le CEM I 52.5 R ou le CEM I 52.5 N ou le ciment sulfoaluminate ou leurs mélanges, de préférence le CEM I 52.5 R ou le ciment sulfoaluminate, plus préférentiellement le CEM I 52.5 R seul ou en mélange avec le ciment sulfoaluminate ;
   b) de 0,5 % à 20 % en poids de laitier de haut fourneau granulé, ayant une surface spécifique allant de 4000 cm$^2$/g à 5000 cm$^2$/g, déterminée selon la méthode Blaine conformément à la norme EN 196-6:2010 ;
   c) de 15 % à 40 % en poids d'une charge calcaire dont la granulométrie est telle que 90 % en poids de la charge passe à travers un tamis de 0,063 mm ;
   d) de 25 % à 50 % en poids d'agrégats calcaires, siliceux ou silico-calcaires, seuls ou en mélange, ayant une granulométrie d'un diamètre maximal inférieur à 2 mm, ledit composant d) étant composé d'une ou plusieurs fractions ayant une granulométrie supérieure à 0,2 mm, de préférence d'un diamètre supérieur à 0,6 mm, et d'une fraction ayant une granulométrie d'un diamètre inférieur ou égal à 0,2 mm et telle que moins de 2 % en poids passe à travers un tamis de 0,063 mm ;
   e) de 0,05 % à 0,8 % en poids d'un superplastifiant à base d'éther polycarboxylique ; de 0,01 % à 0,3 % en poids d'un agent modificateur de la rhéologie qui est un polyamide avec l'azote amide substitué et ayant un MW allant de $2\times10^6$Da à $5\times10^6$Da ; de 0,008 % à 0,50 % en poids d'un agent modificateur de la rhéologie qui est l'hydroxyméthyléthylcellulose ; de 0,3 % à 0,6 % en poids d'un agent réducteur de retrait ; de 0,10 % à 0,30 % d'un additif hydrophobe choisi parmi les dérivés de silicone ou de silane et/ou leurs mélanges, de préférence un alkyloxysilane, plus préférentiellement, le triéthoxy(octyl)silane,
   dans lequel le rapport pondéral liant/granulat varie de 0,55 à 1,4, le liant étant composé des composants a) et b) du mélange cimentaire,
   dans lequel le rapport entre le superplastifiant et les deux modificateurs de rhéologie, présents simultanément, varie entre 0,7 et 1,2 ;
   et ledit mélange a une valeur de couple allant de 1 000 N-mm à 2 100 N-mm, mesurée à une vitesse de rotation de 5 tours par minute et à une température de 20°C.

9. Utilisation d'un mélange cimentaire selon une ou plusieurs des revendications précédentes 1 à 8, comme matériau d'extrusion dans une imprimante 3D.

10. Procédé d'impression 3D comprenant les étapes suivantes :

   - préparation d'un mélange cimentaire selon une ou plusieurs des revendications 1 à 8 ;
   - alimentation d'un appareil d'impression 3D avec le mélange cimentaire ;
   - extrusion du mélange cimentaire à partir de l'imprimante 3D au moyen d'une extrudeuse adaptée à l'extrusion du mélange ;

    - impression du modèle 3D par le dépôt de couches consécutives de mélange cimentaire.

**11.** Produit fini ayant une géométrie complexe obtenue par impression 3D avec un appareil alimenté par un mélange cimentaire selon l'une quelconque des revendications de 1 à 8.

Figure 1

Figure 2

Figure 3

Figure 4

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 104310918
- CN 201510838044 A
- WO 2017050421 A1
- US 20140252672 A1
- US 7641461 B2
- US 7837378 B2
- US 7878789 B2
- US 7753642 B2
- EP 3421201 A1
- CN 108374675 A

### Non-patent literature cited in the description

- Mix design and fresh properties for high-performance printing concrete. **T.T. LE ; S.A. et al.** MATERIALS AND STRUCTURES. KLUWER ACADEMIC PUBLISHERS, 19 January 2012, vol. 45, 1221-1232
- Large-scale 3D printing of ultra-high performance concrete - a new processing route for architects and builders. **GOSSELIN C. et al.** MATERIALS AND DESIGN. ELSEVIER, 25 March 2016, vol. 100, 102-109
- **PETER WRAY.** Additive manufacturing - Turning manufacturing inside out". *American Ceramic Society Bulletin,* 2014, vol. 93 (3
- **S. LIM ; R.A. BUSWELL ; T.T. LE ; S. AUSTIN ; A.G. GIBB ; T. THORPE.** Development in construction-scale additive manufacturing process. *Automation Construction,* 2012, vol. 21, 262268
- **R.A. BUSWELL ; R.C. SOAR ; A.G.F. GIBB ; A. THORPE.** Freeform construction: mega-scale rapid manufacturing for construction. *Automation in Construction,* 2007, vol. 16, 224-231
- **T.T. LE ; S.A. AUSTIN ; S. LIM ; R.A. BUSWELL ; A.G.F. GIBB ; T. THORPE.** Mix design and fresh properties for high-performance printing concrete. *Materials and Structures,* 2012, vol. 45, 1221-1232
- **B. KHOSHNEVIS ; D. HWANG ; K.T. YAO ; Z. YEH.** Mega-Scale fabrication by contour crafting. *Industrial and Systems Engineering international journal,* 2006, vol. 1 (3), 301-320
- **D. HWANG ; B. KHOSHNEVIS.** Concrete wall fabrication by contour crafting. *21st International Symposium on Automation and Robotics in Construction (ISARC 2004),* 2004
- **B. KHOSHNEVIS.** Automated construction by contour crafting-related robotics and information technologies. *Automation in Construction,* 2004, vol. 13 (1), 5-19
- **FRANKSON, LIES.** Printing your dream house: innovations in construction. *IMIESA,* 2015, vol. 40 (4), 33-34
- **HÜSKEN G. ; BROUWERS H.J.H.** On the early-age behavior of zero-slump concrete. *Cement and Concrete Research,* 2012, vol. 42, 501-510